# EUROPÄISCHE PATENTSCHRIFT

(11) **EP 3 535 793 B1**
(45) Veröffentlichungstag und Bekanntmachung des Hinweises auf die Patenterteilung: **11.12.2019**
(21) Anmeldenummer: 17790708.6
(22) Anmeldetag: 11.10.2017
(51) Int. Cl.: H01M 4/134, H01M 4/1395, H01M 4/36, H01M 4/38, H01M 4/62, H01M 10/0525

(54) **KOHLENSTOFF-BESCHICHTETE SILICIUMPARTIKEL FÜR LITHIUMIONEN-BATTERIEN**
CARBON-COATED SILICON PARTICLES FOR LITHIUM ION BATTERIES
PARTICULES DE SILICIUM RECOUVERTES DE CARBONE POUR DES BATTERIES LITHIUM-ION

(30) Priorität: 07.11.2016 DE 102016221782
(43) Veröffentlichungstag der Anmeldung: 11.09.2019
(73) Patentinhaber: Wacker Chemie AG, 81737 München (DE)
(72) Erfinder: WEGENER, Jennifer, 80538 München (DE); HAUFE, Stefan, 85579 Neubiberg (DE); STOHRER, Jürgen, 82049 Pullach (DE)
(74) Vertreter: Ege, Markus
(86) Internationale Anmeldenummer: PCT/EP2017/075947
(87) Internationale Veröffentlichungsnummer: WO 2018/082880

(56) Entgegenhaltungen:
- EP-A1- 2 919 298
- JP-A- 2004 259 475
- US-A1- 2007 122 712
- US-A1- 2015 270 536

## Beschreibung

Die Beschreibung betrifft Kohlenstoff-beschichtete, mikroskalige Siliciumpartikel, Verfahren zu deren Herstellung sowie deren Verwendung zur Herstellung von Elektrodenmaterialien für Lithiumionen-Batterien, insbesondere zur Herstellung der negativen Elektroden von Lithiumionen-Batterien.

Wiederaufladbare Lithium-Ionen-Batterien sind momentan die kommerziell verfügbaren elektrochemischen Energiespeicher mit der höchsten spezifischen Energie von bis zu 250 Wh/kg. Sie werden vor allem im Bereich der tragbaren Elektronik, für Werkzeuge und auch für Transportmittel, wie beispielsweise Fahrräder oder Automobile, genutzt. Insbesondere für die Anwendung in Automobilen ist es jedoch notwendig, die Energiedichte der Batterien weiter deutlich zu steigern, um höhere Reichweiten der Fahrzeuge zu erreichen.

Als negatives Elektrodenmaterial ("Anode") wird in der Praxis gegenwärtig vor allem graphitischer Kohlenstoff verwendet. Graphitischer Kohlenstoff zeichnet sich durch seine stabilen Zykleneigenschaften und seine, im Vergleich zu Lithiummetall, das in Lithium-Primärzellen verwendet wird, recht hohe Handhabungssicherheit aus. So erfährt graphitischer Kohlenstoff bei der Ein- und Auslagerung von Lithium nur geringe Volumenänderungen, beispielsweise im Bereich von 10% für die Grenzstöchiometrie von LiC₆. Nachteilig ist jedoch seine relativ niedrige elektrochemische Kapazität von theoretisch 372 mAh/g, die nur etwa ein Zehntel der mit Lithiummetall theoretisch erreichbaren elektrochemischen Kapazität entspricht.

Dagegen besitzt Silicium mit 4199 mAh/g die höchste bekannte Speicherkapazität für Lithium-Ionen. Nachteiligerweise erleiden Silicium enthaltende Elektrodenaktivmaterialien beim Laden bzw. Entladen mit Lithium extreme Volumenänderungen von bis ungefähr 300%. Durch diese Volumenänderung kommt es zu einer starken mechanischen Beanspruchung des Aktivmaterials und der gesamten Elektrodenstruktur, die durch elektrochemisches Mahlen zu einem Verlust der elektrischen Kontaktierung und damit zur Zerstörung der Elektrode unter Kapazitätsverlust führt. Weiterhin reagiert die Oberfläche des eingesetzten Silicium-Anodenmaterials mit Bestandteilen des Elektrolyten unter kontinuierlicher Bildung passivierender Schutzschichten (Solid Electrolyte Interphase; SEI), was zu einem irreversiblen Verlust an mobilem Lithium führt.

Um solchen Problemen entgegenzutreten, wurden in einer Reihe von Schriften Kohlenstoff-beschichtete Siliciumpartikel als Aktivmaterial für Anoden von Lithiumionen-Batterien empfohlen. So beschreibt Liu, Journal of The Electrochemical Society, 2005, 152 (9), Seiten A1719 bis A1725 Kohlenstoff-beschichtete Siliciumpartikel mit einem hohen Kohlenstoffanteil von 27 Gew.-%. Mit 20 Gew.-% Kohlenstoff beschichtete Siliciumpartikel werden von Ogumi beschrieben im Journal of The Electrochemical Society, 2002, 149 (12), Seiten A1598 bis A1603. In JP2002151066 ist ein Kohlenstoffanteil von 11 bis 70 Gew.-% für Kohlenstoffbeschichtete Siliciumpartikel angegeben. Die beschichteten Partikel von Yoshio, Chemistry Letters, 2001, Seiten 1186 bis 1187, enthalten 20 Gew.-% Kohlenstoff und eine durchschnittliche Partikelgröße von 18 µm. Die Schichtdicke der Kohlenstoffbeschichtung beträgt 1,25 µm. Aus der Veröffentlichung von N.-L. Wu, Electrochemical and Solid-State Letters, 8 (2), 2005, Seiten A100 bis A103, sind Kohlenstoff-beschichtete Siliciumpartikel mit einem Kohlenstoffanteil von 27 Gew.-% bekannt.

Die JP2004-259475 lehrt Verfahren zum Beschichten von Siliciumpartikeln mit Nichtgraphitkohlenstoffmaterial und gegebenenfalls Graphit sowie anschließendem Carbonisieren, wobei der Prozesszyklus aus Beschichten und Carbonisieren mehrfach wiederholt wird. Zudem gibt die JP2004-259475 an, das Nichtgraphitkohlenstoffmaterial und etwaiges Graphit in Form einer Suspension für die Oberflächenbeschichtung einzusetzen. Solche Verfahrensmaßnahmen führen bekanntermaßen zu aggregierten Kohlenstoff-beschichteten Siliciumpartikeln. Auch in der US8394532 erfolgte die Herstellung von Kohlenstoff-beschichteten Siliciumpartikeln aus einer Dispersion. Für das Ausgangsmaterial sind 20 Gew.-% Kohlefasern angegeben, bezogen auf Silicium.

Die EP1024544 befasst sich mit Siliciumpartikeln, deren Oberfläche vollständig mit einer Kohlenstoffschicht bedeckt ist. Konkret sind aber nur aggregierte Kohlenstoff-beschichtete Siliciumpartikel offenbart, wie die Beispiele an Hand der durchschnittlichen Partikeldurchmesser von Silicium und der Produkte veranschaulichen. Die EP2919298 lehrt Verfahren zur Herstellung von Kompositen durch Pyrolisieren von Mischungen enthaltend Siliciumpartikel und zum überwiegenden Teil Polymere und anschließendes Mahlen, was aggregierte Partikel impliziert. Die US2016/0104882 hat Kompositmaterialien zum Gegenstand, in denen eine Vielzahl von Siliciumpartikeln in eine Kohlenstoffmatrix eingebettet sind. Damit liegen die einzelnen Kohlenstoffbeschichteten Siliciumpartikel von Form von Aggregaten vor.

Die US2009/0208844 beschreibt Siliciumpartikel mit einer Kohlenstoffbeschichtung enthaltend elektrisch leitfähiges, elastisches Kohlenstoffmaterial, konkret expandierten Graphit. Damit sind Siliciumpartikel offenbart, an deren Oberfläche expandierte Graphitpartikel mittels einer Kohlenstoffbeschichtung partikulär angebunden sind. Verfahrenstechnische Anhaltspunkte zur Herstellung von nicht-aggregierten, Kohlenstoff-beschichteten Siliciumpartikel sind der US2009/0208844 nicht entnehmbar. Die US2012/0100438 beinhaltet poröse Siliciumpartikel mit Kohlenstoffbeschichtung, allerdings ohne konkrete Angaben zur Herstellung der Beschichtung und die Kohlenstoff- und Silicium-Anteile der Partikel zu treffen.

Die EP1054462 lehrt zur Herstellung von Anoden, Stromkollektoren mit Siliciumpartikeln und Bindemitteln zu beschichten und anschließend zu carbonisieren.

Vor diesem Hintergrund bestand weiterhin die Aufgabe, Siliciumpartikel als Aktivmaterial für Anoden von Lithiumionen-Batterien so zu modifizieren, dass die entsprechenden Lithium-Ionen-Batterien hohe initiale reversible Kapazitäten und zudem in den Folgezyklen ein stabiles elektrochemisches Verhalten mit möglichst geringem Rückgang der reversiblen Kapazität (Fading) aufweisen.

Ein Gegenstand der Beschreibung sind nicht-aggregierte Kohlenstoff-beschichtete Siliciumpartikel mit durchschnittlichen Partikeldurchmessern d₅₀ von 1 bis 15 µm, die ≤ 10 Gew.-% Kohlenstoff und ≥ 90 Gew.-% Silicium enthalten, je bezogen auf das Gesamtgewicht der Kohlenstoff-beschichteten Siliciumpartikel.

Ein weiterer Gegenstand der Beschreibung sind Verfahren zur Herstellung der vorgenannten, Kohlenstoff-beschichteten Siliciumpartikel nach
a) Trockenverfahren, in denen Mischungen enthaltend Siliciumpartikel und ein oder mehrere schmelzbare Kohlenstoff-Precursoren auf eine Temperatur von < 400°C erwärmt werden, bis die schmelzbaren Kohlenstoff-Precursoren vollständig geschmolzen sind (Aufschmelzstufe), und anschließend die so erhaltenen geschmolzenen Kohlenstoff-Precursoren carbonisiert werden; oder
b) CVD-Verfahren (Chemical-Vapor-Deposition, chemische Gasphasenabscheidung), in denen Siliciumpartikel unter Einsatz von einer oder mehreren Kohlenstoff-Vorstufen mit Kohlenstoff beschichtet werden, wobei die Partikel während der Durchführung des CVD-Verfahrens bewegt werden und das CVD-Verfahren in einer Atmosphäre durchgeführt wird, die zu 0,1 bis 80 Vol.-% Kohlenstoff-Vorstufen enthält, bezogen auf das Gesamtvolumen der Atmosphäre.

Ein weiterer Gegenstand der Beschreibung sind nicht-aggregierte Kohlenstoff-beschichtete Siliciumpartikel mit durchschnittlichen Partikeldurchmessern d₅₀ von 1 bis 15 µm, die ≤ 10 Gew.-% Kohlenstoff und ≥ 90 Gew.-% Silicium enthalten, je bezogen auf das Gesamtgewicht der Kohlenstoff-beschichteten Siliciumpartikel, erhältlich nach den vorgenannten Verfahren.

Die nicht-aggregierten Kohlenstoff-beschichteten Siliciumpartikel werden im Folgenden auch verkürzt als Kohlenstoff-beschichtete Siliciumpartikel bezeichnet.

Um die Kohlenstoff-beschichtete Siliciumpartikel gewinnen zu können, erwies es sich als erfindungswesentlich, die erfindungsgemäßen Maßgaben für das Trockenverfahren beziehungsweise für das CVD-Verfahren zu befolgen. Andernfalls werden beispielsweise Aggregate von Kohlenstoff-beschichteten Siliciumpartikeln gebildet.

Überraschenderweise sind Kohlenstoff-beschichteten Siliciumpartikel erhältlich, die nicht aggregiert sind. Ein Verkleben oder Versintern und damit eine Aggregierung unterschiedlicher Partikel trat überraschenderweise nicht oder zumindest nicht in nennenswertem Umfang auf. Dies war umso überraschender, da während der Carbonisierung der schmelzbaren Kohlenstoff-Precursoren bzw. der Kohlenstoff-Vorstufen wie üblich flüssige oder pastöse Kohlenstoff-haltige Spezies vorliegen, die als Klebstoff fungieren können und nach Abkühlen zu einem Zusammenbacken der Partikel führen können. Überraschenderweise wurden dennoch nicht-aggregierte Kohlenstoff-beschichtete Siliciumpartikel erhalten.

Die Kohlenstoff-beschichteten Siliciumpartikel liegen vorzugsweise in Form von isolierten Partikeln oder lockeren Agglomeraten vor, jedoch nicht in Form von Aggregaten von Kohlenstoffbeschichteten Siliciumpartikeln. Agglomerate sind Zusammenballungen von mehreren Kohlenstoff-beschichteten Siliciumpartikeln. Aggregate sind Zusammenlagerungen von Kohlenstoff-beschichteten Siliciumpartikeln. Agglomerate lassen sich in die einzelnen Kohlenstoff-beschichteten Siliciumpartikel separieren, beispielsweise mit Knet- oder Dispergierverfahren. Aggregate lassen sich auf diese Weise nicht in die einzelnen Partikel trennen, ohne Kohlenstoff-beschichtete Siliciumpartikel zu zerstören. Dies schließt jedoch für Einzelfälle nicht aus, dass im erfindungsgemäßen Verfahren zu geringem Anteil aggregierte Kohlenstoff-beschichtete Siliciumpartikel gebildet werden.

Das Vorliegen von Kohlenstoff-beschichteten Siliciumpartikeln in Form von Aggregaten kann beispielsweise mittels Raster-Elektronen-Mikroskopie (REM) oder Transmissions-Elektronen-Mikroskopie (TEM) sichtbar gemacht werden. Besonders geeignet ist hierzu ein Vergleich von REM-Aufnahmen beziehungsweise TEM-Aufnahmen der unbeschichteten Siliciumpartikel mit entsprechenden Aufnahmen der Kohlenstoff-beschichteten Siliciumpartikel. Statische Lichtstreuungsmethoden zur Bestimmung der Teilchengrößenverteilungen oder Partikeldurchmesser sind alleine nicht geeignet, das Vorliegen von Aggregaten zu ermitteln. Wenn die Kohlenstoff-beschichteten Siliciumpartikel jedoch im Rahmen der Messgenauigkeit signifikant größere Partikeldurchmesser haben als die zu deren Herstellung eingesetzten Siliciumpartikel, so ist dies ein Hinweis auf das Vorliegen von aggregierten Kohlenstoff-beschichteten Siliciumpartikeln. Besonders bevorzugt werden die vorgenannten Bestimmungsmethoden in Kombination eingesetzt.

Die Kohlenstoff-beschichteten Siliciumpartikel weisen einen Aggregationsgrad von bevorzugt ≤ 40%, besonders bevorzugt ≤ 30% und am meisten bevorzugt ≤ 20% auf. Bestimmt wird der Aggregationsgrad durch eine Siebanalyse. Der Aggregationsgrad entspricht dem Prozentsatz der Partikel, die nach Dispersion in Ethanol bei gleichzeitiger Ultraschallbehandlung nicht durch ein Sieb mit einer Maschenweite des doppelten d₉₀-Wertes der volumengewichteten Partikelgrößenverteilung der jeweiligen zu untersuchenden Partikel-Zusammensetzung hindurch treten.

Die Differenz aus den volumengewichteten Partikelgrößenverteilungen d₅₀ der Kohlenstoff-beschichteten Siliciumpartikel und der als Edukt eingesetzten Siliciumpartikel ist auch ein Indikator dafür, dass die Kohlenstoff-beschichteten Siliciumpartikel nicht aggregiert sind. Die Differenz aus der volumengewichteten Partikelgrößenverteilung d₅₀ der Kohlenstoff-beschichteten Siliciumpartikel und der volumengewichteten Partikelgrößenverteilung d₅₀ der als Edukt zur Herstellung der Kohlenstoff-beschichteten Siliciumpartikel eingesetzten Siliciumpartikel beträgt vorzugsweise ≤ 5 µm, besonders bevorzugt ≤ 3 µm und am meisten bevorzugt ≤ 2 µm.

Die Kohlenstoff-beschichteten Siliciumpartikel haben volumengewichtete Partikelgrößenverteilungen mit Durchmesser-Perzentilen d₅₀ von vorzugsweise ≥ 2 µm, besonders bevorzugt ≥ 3 µm und am meisten bevorzugt ≥ 4 µm. Die Kohlenstoff-beschichteten Siliciumpartikel haben d₅₀-Werte von vorzugsweise ≤ 10 µm, besonders bevorzugt ≤ 8 µm und am meisten bevorzugt ≤ 6 µm.

Die Kohlenstoff-beschichteten Siliciumpartikel haben volumengewichtete Partikelgrößenverteilungen mit d₉₀-Werten von vorzugsweise ≤ 40 µm, besonders bevorzugt d₉₀ ≤ 30 µm und ganz besonders bevorzugt d₉₀ ≤ 10 µm.

Die Kohlenstoff-beschichteten Siliciumpartikel haben volumengewichtete Partikelgrößenverteilungen mit d₁₀-Werten von vorzugsweise ≥ 0,5 µm, besonders bevorzugt d₁₀ ≥ 1 µm und am meisten bevorzugt d₁₀ ≥ 1,5 µm.

Die Partikelgrößenverteilung der Kohlenstoff-beschichteten Siliciumpartikel kann bimodal oder polymodal sein und ist bevorzugt monomodal, besonders bevorzugt schmal. Die volumengewichtete Partikelgrößenverteilung der Kohlenstoff-beschichteten Siliciumpartikel hat eine Breite (d₉₀-d₁₀)/d₅₀ von bevorzugt ≤ 3, mehr bevorzugt ≤ 2,5, besonders bevorzugt ≤ 2 und am meisten bevorzugt ≤ 1,5.

Die Bestimmung der volumengewichteten Partikelgrößenverteilung der Kohlenstoff-beschichteten Siliciumpartikel erfolgte durch statische Laserstreuung unter Anwendung des Mie-Modells mit dem Messgerät Horiba LA 950 mit Ethanol als Dispergiermedium für die Kohlenstoff-beschichteten Siliciumpartikel.

Die Kohlenstoff-Beschichtung der Kohlenstoff-beschichteten Siliciumpartikel hat eine mittlere Schichtdicke im Bereich von vorzugsweise 1 bis 100 nm, besonders bevorzugt 1 bis 50 nm (Bestimmungsmethode: Raster-Elektronen-Mikroskopie (REM) und/oder Transmissions-Elektronen-Mikroskopie (TEM)).

Die Kohlenstoff-beschichteten Siliciumpartikel weisen typischerweise BET-Oberflächen auf von bevorzugt 0,1 bis 10 m²/g, besonders bevorzugt 0,3 bis 8 m²/g und am meisten bevorzugt 0,5 bis 5 m²/g (Bestimmung nach DIN ISO 9277:2003-05 mit Stickstoff) .

Die Kohlenstoff-Beschichtung kann porös sein und ist vorzugsweise unporös. Die Kohlenstoff-Beschichtung hat eine Porosität von vorzugsweise ≤ 2% und besonders bevorzugt ≤ 1% (Bestimmungsmethode der Gesamtporosität: 1 minus [Quotient aus Rohdichte (bestimmt mittels Xylol-Pyknometrie gemäß DIN 51901) und Skelettdichte (bestimmt mittels He-Pyknometrie gemäß DIN 66137-2)]).

Die Kohlenstoff-Beschichtung der Kohlenstoff-beschichteten Siliciumpartikel ist vorzugsweise undurchlässig für flüssige Medien, wie wässrige oder organische Lösungsmittel oder Lösungen, insbesondere wässrige oder organische Elektrolyte, Säuren oder Laugen.

Generell befinden sich die Siliciumpartikel nicht in Poren. Die Kohlenstoff-Beschichtung liegt im Allgemeinen unmittelbar auf der Oberfläche der Siliciumpartikel auf.

Die Kohlenstoff-Beschichtung ist im Allgemeinen filmartig beziehungsweise im Allgemeinen nicht partikulär oder faserartig. Im Allgemeinen enthält die Kohlenstoff-Beschichtung keine Partikel oder keine Fasern, wie Kohlenstofffasern oder Graphitpartikel.

In den Kohlenstoff-beschichteten Siliciumpartikeln sind die Siliciumpartikel teilweise oder vorzugsweise vollständig in Kohlenstoff eingebettet. Die Oberfläche der Kohlenstoff-beschichteten Siliciumpartikel besteht teilweise oder vorzugsweise vollständig aus Kohlenstoff.

Der Kohlenstoff kann in der Kohlenstoff-Beschichtung in amorpher Form oder vorzugsweise teilweise oder vollständig in kristalliner Form vorliegen.

Im Allgemeinen enthält jeder Kohlenstoff-beschichtete Siliciumpartikel einen Siliciumpartikel (Bestimmungsmethode: Raster-Elektronen-Mikroskopie (REM) und/oder Transmissions-Elektronen-Mikroskopie (TEM)).

Die Kohlenstoff-beschichteten Siliciumpartikel können beliebige Formen annehmen und sind bevorzugt splittrig.

Die Kohlenstoff-beschichteten Siliciumpartikel enthalten vorzugsweise 0,1 bis 8 Gew.-%, mehr bevorzugt 1 bis 7 Gew.-%, noch mehr bevorzugt 1 bis 5 Gew.-% und besonders bevorzugt 1 bis 4 Gew.-% Kohlenstoff. Die Kohlenstoff-beschichteten Siliciumpartikel enthalten vorzugsweise 92 bis 99,9 Gew.-%, mehr bevorzugt 93 bis 99 Gew.-%, noch mehr bevorzugt 95 bis 99 Gew.-% und besonders bevorzugt 96 bis 99 Gew.-% Siliciumpartikel. Die vorgenannten Angaben in Gew.-% beziehen sich jeweils auf das Gesamtgewicht der Kohlenstoff-beschichteten Siliciumpartikel.

Die Kohlenstoff-Beschichtung kann Sauerstoff-Gehalte von beispielsweise ≤ 20 Gew.-%, bevorzugt ≤ 10 Gew.-% und besonders bevorzugt ≤ 5 Gew.-% enthalten. Stickstoff kann in der Kohlenstoff-Beschichtung beispielsweise zu 0 bis 10 Gew.-% und vorzugsweise zwischen 2 und 5 Gew.-% enthalten sein. Stickstoff liegt hierbei vorzugsweise chemisch gebunden in Form von Heterocyclen vor, beispielsweise als Pyridin- oder Pyrrol-Einheiten (N). Neben den genannten Hauptbestandteilen können auch weitere chemische Elemente, beispielsweise in Form eines gezielten Zusatzes oder zufälliger Verunreinigung, enthalten sein: wie Li, Fe, Al, Cu, Ca, K, Na, S, Cl, Zr, Ti, Pt, Ni, Cr, Sn, Mg, Ag, Co, Zn, B, P, Sb, Pb, Ge, Bi, Seltene Erden; deren Gehalte sind bevorzugt ≤ 1 Gew.-% und besonders bevorzugt ≤ 100 ppm. Die vorgenannten Angaben in Gew.% beziehen sich jeweils auf das Gesamtgewicht der Kohlenstoff-Beschichtung.

Des Weiteren können die Kohlenstoff-beschichteten Siliciumpartikel ein oder mehrere Leitadditive enthalten, beispielsweise Graphit, Leitruß, Graphen, Graphenoxid, Graphennanoplatelets, Kohlenstoff-Nanoröhrchen oder metallische Partikel, wie Kupfer. Vorzugsweise sind keine Leitadditive enthalten.

Die Siliciumpartikel haben volumengewichtete Partikelgrößenverteilungen mit Durchmesser-Perzentilen dso von vorzugsweise 1 bis kleiner 15 µm, besonders bevorzugt 2 bis kleiner 10 µm und am meisten bevorzugt 3 bis kleiner 8 µm auf (Bestimmung: mit dem Messgerät Horiba LA 950 wie oben für die Kohlenstoff-beschichteten Siliciumpartikel beschrieben).

Die Siliciumpartikel sind vorzugsweise nicht aggregiert und besonders bevorzugt nicht agglomeriert. Aggregiert bedeutet, dass sphärische oder weitestgehend sphärische Primärpartikel, wie sie beispielsweise zunächst in Gasphasenprozessen bei der Herstellung der Siliciumpartikel gebildet werden, im weiteren Reaktionsverlauf des Gasphasenprozesses zu Aggregaten zusammenwachsen. Aggregate oder Primärpartikel können auch Agglomerate bilden. Agglomerate sind eine lose Zusammenballung von Aggregaten oder Primärpartikeln. Agglomerate können mit typischerweise eingesetzten Knet- und Dispergierverfahren leicht wieder in die Aggregate aufgespalten werden. Aggregate lassen sich mit diesen Verfahren nicht oder nur teilweise in die Primärpartikel zerlegen. Aggregate und Agglomerate haben auf Grund ihrer Entstehung zwangsläufig ganz andere Kornformen als die bevorzugten Siliciumpartikel. Zur Ermittlung von Aggregation gilt für die Siliciumpartikel das diesbezüglich zu den Kohlenstoff-beschichteten Siliciumpartikeln Gesagte in analoger Weise.

Die Siliciumpartikel haben vorzugsweise splittrige Kornformen.

Siliciumpartikel können aus elementarem Silicium, einem Siliciumoxid oder einer binären, ternären oder multinären Silicium/Metall-Legierung (mit beispielsweise Li, Na, K, Sn, Ca, Co, Ni, Cu, Cr, Ti, Al, Fe) bestehen. Bevorzugt wird elementares Silicium eingesetzt, insbesondere da dieses eine vorteilhaft hohe Speicherkapazität für Lithium-Ionen aufweist.

Unter elementarem Silicium ist im Allgemeinen hochreines Polysilicium, mit geringem Anteil an Fremdatomen (wie beispielsweise B, P, As), gezielt mit Fremdatomen dotiertes Silicium (wie beispielsweise B, P, As), aber auch Silicium aus metallurgischer Verarbeitung, welches elementare Verunreinigung (wie beispielsweise Fe, Al, Ca, Cu, Zr, C) aufweisen kann, zu verstehen.

Falls die Siliciumpartikel ein Siliciumoxid enthalten, dann liegt die Stöchiometrie des Oxids SiOₓ bevorzugt im Bereich 0 < x < 1,3. Falls die Siliciumpartikel ein Siliciumoxid mit höherer Stöchiometrie enthalten, dann ist dessen Schichtdicke auf der Oberfläche bevorzugt kleiner als 10 nm.

Wenn die Siliciumpartikel mit einem Alkalimetall M legiert sind, dann liegt die Stöchiometrie der Legierung M_{y}Si bevorzugt im Bereich 0 < y < 5. Die Siliciumpartikel können gegebenenfalls prälithiiert sein. Für den Fall, dass die Siliciumpartikel mit Lithium legiert sind, liegt die Stöchiometrie der Legierung Li_{z}Si bevorzugt im Bereich 0 < z < 2,2.

Besonders bevorzugt sind Siliciumpartikel, die ≥ 80 Mol% Silicium und/oder ≤ 20 Mol% Fremdatome, ganz besonders bevorzugt ≤ 10 Mol% Fremdatome enthalten.

Die Siliciumpartikel bestehen in einer bevorzugten Ausführungsform zu vorzugsweise ≥ 96 Gew.-%, besonders bevorzugt ≥ 98 Gew.-% aus Silicium, bezogen auf das Gesamtgewicht der Siliciumpartikel. Die Siliciumpartikel enthalten vorzugsweise im Wesentlichen keinen Kohlenstoff.

Die Oberfläche der Siliciumpartikel kann gegebenenfalls durch eine Oxidschicht oder durch andere anorganische und organische Gruppen abgedeckt sein. Besonders bevorzugte Siliciumpartikel tragen auf der Oberfläche Si-OH- oder Si-H-Gruppen oder kovalent angebundene organische Gruppen, wie beispielsweise Alkohole oder Alkene.

Die Siliciumpartikel können beispielsweise durch Mahlprozesse hergestellt werden, beispielsweise Nass- oder vorzugsweise Trockenmahlprozesse. Hierbei werden vorzugsweise Strahlmühlen eingesetzt, beispielsweise Gegenstrahlmühlen, oder Prallmühlen, Planetenkugelmühlen oder Rührwerkskugelmühlen. Die Nassmahlung erfolgt im Allgemeinen in einer Suspension mit organischen oder anorganischen Dispergiermedien. Hierbei können die etablierten Verfahren Anwendung finden, wie beispielsweise in der Patentanmeldung mit der Anmeldenummer DE 102015215415.7 beschrieben.

Im erfindungsgemäßen Trockenverfahren zur Herstellung der Kohlenstoff-beschichteten Siliciumpartikel werden Mischungen hergestellt enthaltend Siliciumpartikel und ein oder mehrere schmelzbare Kohlenstoff-Precursoren.

Die Mischungen enthalten die Siliciumpartikel zu vorzugsweise 20 bis 99 Gew.-%, mehr bevorzugt 30 bis 98 Gew.-%, noch mehr bevorzugt 50 bis 97 Gew.-%, besonders bevorzugt 70 bis 96 Gew.-% und am meisten bevorzugt 80 bis 95 Gew.-%, bezogen auf das Gesamtgewicht der Mischungen.

Bei bevorzugten schmelzbaren Kohlenstoff-Precursoren handelt es sich um Polymere. Bevorzugte Polymere sind Polyacrylnitril; Kohlenhydrate, wie Mono-, Di- und Polysaccharide; Polyvinylaromaten oder Polyaromaten, wie Polyanilin, Polystyrol; polyaromatische Kohlenwasserstoffe, wie Peche oder Teere, insbesondere Mesogenes Pech, Mesophasen-Pech, Petrolpech, Steinkohlenteerpech. Besonders bevorzugte Polymere sind polyaromatische Kohlenwasserstoffe, Peche und Polyacrylnitril.

Die Mischungen enthalten die schmelzbaren Kohlenstoff-Precursoren zu vorzugsweise 1 bis 80 Gew.-%, mehr bevorzugt 2 bis 70 Gew.-%, noch mehr bevorzugt 3 bis 50 Gew.-%, besonders bevorzugt 4 bis 30 Gew.-% und am meisten bevorzugt 5 bis 20 Gew.-%, bezogen auf das Gesamtgewicht der Mischungen.

Des Weiteren können die Mischungen für das Trockenverfahren ein oder mehrere Leitadditive enthalten, beispielsweise Graphit, Leitruß, Graphen, Graphenoxid, Graphennanoplatelets, Kohlenstoff-Nanoröhrchen oder metallische Partikel, wie Kupfer. Vorzugsweise sind keine Leitadditive enthalten.

Beim Trockenverfahren wird allgemein kein Lösungsmittel eingesetzt. Es wird im Allgemeinen in Abwesenheit von Lösungsmittel durchgeführt. Dies schließt jedoch nicht aus, dass die eingesetzten Edukte, beispielsweise in Folge ihrer Herstellung, etwaige Restgehalte an Lösungsmittel enthalten. Vorzugsweise enthalten die Mischungen für das Trockenverfahren, insbesondere die Siliciumpartikel und/oder die schmelzbaren Kohlenstoff-Precursoren, ≤ 2 Gew.%, besonders bevorzugt ≤ 1 Gew.% und am meisten bevorzugt ≤ 0,5 Gew.% Lösungsmittel.

Beispiele für Lösungsmittel sind anorganische Lösungsmittel, wie Wasser, oder organische Lösungsmittel, insbesondere Kohlenwasserstoffe, Ether, Ester, Stickstoff-funktionelle Lösungsmittel, Schwefel-funktionelle Lösungsmittel, Alkohole, wie Ethanol und Propanol, Benzol, Toluol, Dimethylformamid, N-Methyl-2-Pyrrolidon, N-Ethyl-2-Pyrrolidon und Dimethylsulfoxid.

Das Mischen der Siliciumpartikel und der schmelzbaren Kohlenstoff-Precursoren kann in herkömmlicher Weise erfolgen, beispielsweise bei Temperaturen von 0 bis 50°C, vorzugsweise 15 bis 35°C. Es können gängige Mischer, wie beispielsweise pneumatische Mischer, Freifallmischer, wie Containermischer, Konusmischer, Fassrollmischer, Rhönradmischer, Taumelmischer oder Schub- und Wurfmischer wie Trommelmischer und Schneckenmischer eingesetzt werden. Zum Mischen können auch hierfür gängige Mühlen eingesetzt werden, wie Planetenkugelmühlen, Rührwerkskugelmühlen oder Trommelmühlen.

Die Mischungen enthaltend Siliciumpartikel und ein oder mehrere schmelzbare Kohlenstoff-Precursoren werden auf eine Temperatur von < 400°C erwärmt, bis die schmelzbaren Kohlenstoff-Precursoren vollständig geschmolzen (Aufschmelzstufe) sind. Die Temperatur in der Aufschmelzstufe für den jeweiligen schmelzbaren Kohlenstoff-Precursor orientiert sich an dessen Schmelzpunkt oder Schmelztemperaturbereich. Im Allgemeinen findet während der Aufschmelzstufe eine Carbonisierung der schmelzbaren Kohlenstoff-Precursoren nicht oder nicht in wesentlichem Umfang statt. Der Anteil der schmelzbaren Kohlenstoff-Precursoren, die während der Aufschmelzstufe carbonisiert werden, ist vorzugsweise ≤ 20 Gew.-%, besonders bevorzugt ≤ 10 Gew.-% und am meisten bevorzugt ≤ 5 Gew.-%, bezogen auf das Gesamtgewicht der insgesamt eingesetzten schmelzbaren Kohlenstoff-Precursoren.

Das Schmelzen der schmelzbaren Kohlenstoff-Precursoren kann in herkömmlichen Öfen erfolgen, wie beispielsweise in Rohrofen, Glühofen, Drehrohrofen oder einem Wirbelschichtreaktor.

Die Dauer der Aufschmelzstufe orientiert sich beispielsweise am Schmelzpunkt, der im Einzelfall gewählten Temperatur für das Schmelzen und auch am Ofen. Die Dauer der Aufschmelzstufe beträgt beispielsweise 5 Minuten bis 2 Stunden, vorzugsweise 10 Minuten bis 70 Minuten.

Die Heizraten während der Aufschmelzstufe betragen vorzugsweise 1 bis 20°C pro Minute, mehr bevorzugt 1 bis 15°C/min, besonders bevorzugt 1 bis 10°C/min.

Die schmelzbaren Kohlenstoff-Precursoren sind vollständig geschmolzen, wenn die schmelzbaren Kohlenstoff-Precursoren von der festen Phase vollständig in ihre flüssige Phase überführt sind, wie allgemein bekannt.

Die schmelzbaren Kohlenstoff-Precursoren werden nach dem vollständigen Schmelzen carbonisiert. Beim Carbonisieren werden schmelzbare Kohlenstoff-Precursoren allgemein in anorganischen Kohlenstoff überführt.

Das Carbonisieren erfolgt vorzugsweise in denselben Vorrichtungen, die auch für die Aufschmelzstufe verwendet werden. Die Carbonisierung kann statisch oder unter ständiger Durchmischung des Reaktionsmediums durchgeführt werden.

Die Carbonisierung erfolgt bei Temperaturen von vorzugsweise über 400 bis 1400°C, besonders bevorzugt 700 bis 1200°C und am meisten bevorzugt 900 bis 1100°C.

Die Heizraten während der Carbonisierung betragen vorzugsweise 1 bis 20°C pro Minute, mehr bevorzugt 1 bis 15°C/min, besonders bevorzugt 1 bis 10°C/min und am meisten bevorzugt 3 bis 5°C/min. Weiterhin ist auch ein stufenweiser Prozess mit verschiedenen Zwischentemperaturen und -heizraten möglich. Nach Erreichen der Zieltemperatur wird die Reaktionsmischung üblicherweise eine gewisse Zeit bei der Temperatur gehalten oder anschließend sogleich abgekühlt. Vorteilhaft sind Haltedauern von beispielsweise 30 min bis 24 h, bevorzugt 1 bis 10 h und besonders bevorzugt 2 bis 4 h. Das Abkühlen kann aktiv oder passiv, gleichmäßig oder stufenweise durchgeführt werden.

Das Mischen und das Carbonisieren können unter aeroben oder vorzugsweise anaeroben Bedingungen stattfinden. Besonders bevorzugt ist eine Inertgas-Atmosphäre, wie Stickstoff- oder vorzugsweise Argon-Atmosphäre. Die Inertgas-Atmosphäre kann gegebenenfalls zusätzlich Anteile eines reduzierenden Gases, wie Wasserstoff, enthalten. Die Inertgas-Atmosphäre kann sich statisch über dem Reaktionsmedium befinden oder in Form eines Gasflusses über die Reaktionsmischung strömen.

Im erfindungsgemäßen CVD-Verfahren zur Herstellung der Kohlenstoff-beschichteten Siliciumpartikel werden Siliciumpartikel unter Einsatz von einem oder mehreren Kohlenstoff-Vorstufen mit Kohlenstoff beschichtet.

Für das CVD-Verfahren geeignete Kohlenstoff-Vorstufen sind beispielsweise Kohlenwasserstoffe, wie aliphatische Kohlenwasserstoffe mit 1 bis 10 Kohlenstoffatomen, insbesondere 1 bis 4 Kohlenstoffatomen. Beispiele hierfür sind Methan, Ethan, Propan, Propylen, Butan, Buten, Pentan, Isobutan, Hexan; ungesättigte Kohlenwasserstoffe mit 1 bis 4 Kohlenstoffatomen, wie Ethylen, Acetylen oder Propylen; aromatische Kohlenwasserstoffe, wie Benzol, Toluol, Styrol, Ethylbenzol, Diphenylmethan oder Naphthalin; weitere aromatische Kohlenwasserstoffe, wie Phenol, Cresol, Nitrobenzol, Chlorbenzol, Pyridin, Anthracen, Phenanthren.

Bevorzugte Kohlenstoff-Vorstufen für das CVD-Verfahren sind Methan, Ethan und insbesondere Ethylen, Acetylen, Benzol oder Toluol.

Beim CVD-Verfahren werden die Siliciumpartikel vorzugsweise in einer Atmosphäre, insbesondere einem Gasstrom, enthaltend eine oder mehrere, im Allgemeinen gasförmige, Kohlenstoff-Vorstufen erhitzt. Die Kohlenstoff-Vorstufen liegen unter den für CVD-Verfahren typischen Verfahrensbedingungen wie üblich im gasförmigen Zustand vor. Wie üblich zersetzen sich die Kohlenstoff-Vorstufen dabei an der heißen Oberfläche der Siliciumpartikel unter Abscheidung von Kohlenstoff.

Das CVD-Verfahren wird in einer Atmosphäre durchgeführt, die zu vorzugsweise 0,1 bis 80 Vol.-%, mehr bevorzugt 0,5 bis 50 Vol.-%, noch mehr bevorzugt 1 bis 30 Vol.-%, am meisten bevorzugt 2 bis 25 Vol.-% und am allermeisten bevorzugt 5 bis 20 Vol.-% Kohlenstoff-Vorstufen enthält, bezogen auf das Gesamtvolumen der Atmosphäre.

Die weiteren, insbesondere die verbleibenden, Bestandteile der Atmosphäre sind vorzugsweise Inertgase, wie Stickstoff oder vorzugsweise Argon, und gegebenenfalls reduzierende Gase, wie Wasserstoff.

Die Atmosphäre enthält vorzugsweise 10 bis 99 Vol.-%, mehr bevorzugt 20 bis 90 Vol.-% besonders bevorzugt 25 bis 80 Vol.-% und am meisten bevorzugt 50 bis 75 Vol.-% Inertgase, bezogen auf das Gesamtvolumen der Atmosphäre.

Die Atmosphäre enthält vorzugsweise 0,01 bis 80 Vol.-%, mehr bevorzugt 3 bis 60 Vol.-% und besonders bevorzugt 5 bis 40 Vol.-% Wasserstoff, bezogen auf das Gesamtvolumen der Atmosphäre.

Während der Durchführung des CVD-Verfahrens werden die Partikel, insbesondere die Siliciumpartikel und die entstandenen Kohlenstoff-beschichteten Siliciumpartikel, bewegt, vorzugsweise fluidisiert.

Das Bewegen beziehungsweise das Fluidisieren der Partikel kann beispielsweise über mechanischen, akustischen und/oder pneumatischen Energieeintrag erfolgen, beispielsweise unter Rühren, Vibrieren oder Beschallung. Das Fluidisieren der Partikel kann durch einen Gasstrom, insbesondere einen Gasstrom enthaltend Kohlenstoff-Vorstufen und gegebenenfalls weitere Bestandteile der Atmosphäre des CVD-Verfahrens, unterstützt werden. Die Geschwindigkeit des Gasstromes wird im Falle einer Fluidisierung vorzugsweise mindestens so groß gewählt, dass die Siliciumpartikel in den fluidisierten Zustand überführt werden können. Im fluidisierten Zustand haben Partikel bekanntermaßen Fluidähnliche Eigenschaften.

Partikel können bekanntermaßen ihrem Fluidisationsverhalten entsprechend in Geldart-Klassen A bis D eingestuft werden. Die Partikel im erfindungsgemäßen CVD-Verfahren gehören vorzugsweise der Geldart-Klasse C an. Der Geldart-Klasse C werden allgemein äußerst kleine und damit kohäsive Partikel mit Partikeldurchmessern von unter 30 µm, insbesondere unter 20 µm zugerechnet. Um nicht-aggregierte Kohlenstoff-beschichtete Siliciumpartikel zu erhalten, muss aufgrund der starken Kohäsionskräfte das erfindungsgemäße CVD-Verfahren in bewegtem, vorzugsweise fluidisiertem Zustand durchgeführt werden. Das Bewegen und Fluidisieren an sich können auf herkömmliche Weise erreicht werden, wie weiter oben angegeben.

Die Temperaturen beim CVD-Verfahren betragen vorzugsweise 600 bis 1400°C, besonders bevorzugt 700 bis 1200°C und am meisten bevorzugt 800 bis 1100°C.

Das CVD-Verfahren wird vorzugsweise bei einem Druck von 0,5 bis 2 bar durchgeführt.

Die Dauer der Behandlung der Siliciumpartikel im CVD-Verfahren beträgt vorzugsweise 1 bis 240 Minuten, besonders bevorzugt 5 bis 120 Minuten und am meisten bevorzugt 10 bis 60 Minuten.

Die Gesamtgasmenge, insbesondere die Gesamtmenge an Kohlenstoff-Vorstufen wird während der Beschichtung allgemein so gewählt, dass die gewünschte Kohlenstoff-Abscheidung erreicht wird.

Ansonsten kann das CVD-Verfahren in herkömmlicher Weise ausgeführt werden.

Vorzugsweise werden die Siliciumpartikel nur durch einen einmaligen Beschichtungsvorgang nach dem Trockenverfahren oder nach dem CVD-Verfahren mit Kohlenstoff beschichtet. Mit Kohlenstoff beschichtete Siliciumpartikel werden vorzugsweise nicht einer weiteren Kohlenstoffbeschichtung nach dem Trockenverfahren oder nach dem CVD-Verfahren oder nach einem sonstigen Verfahren unterzogen.

Die nach dem Trockenverfahren oder nach dem CVD-Verfahren erhaltenen Kohlenstoff-beschichteten Siliciumpartikel können unmittelbar ihrer weiteren Verwertung zugeführt werden, beispielsweise zur Herstellung von Elektrodenmaterialien, oder alternativ durch Klassierungstechniken (Sieben, Sichten) von Über- oder Unterkorn befreit werden. Vorzugsweise unterbleiben mechanische Nachbehandlungen oder Klassierung, insbesondere unterbleibt ein Mahlen.

Die Kohlenstoff-beschichteten Siliciumpartikel eignen sich beispielsweise als Silicium-basierte Aktivmaterialien für Anodenaktivmaterialien für Lithium-Ionen-Batterien.

Ein weiterer Gegenstand der Beschreibung sind Anodenmaterialien für Lithium-Ionen-Batterien enthaltend ein oder mehrere Bindemittel, gegebenenfalls Graphit, gegebenenfalls eine oder mehrere weitere elektrisch leitende Komponenten und gegebenenfalls ein oder mehrere Additive, dadurch gekennzeichnet, dass ein oder mehrere erfindungsgemäße Kohlenstoff-beschichtete Siliciumpartikel enthalten sind.

Bevorzugte Rezepturen für das Anodenmaterial der Lithium-Ionen-Batterien enthalten vorzugsweise 5 bis 95 Gew.-%, insbesondere 60 bis 85 Gew.-% erfindungsgemäße Kohlenstoff-beschichtete Siliciumpartikel; 0 bis 40 Gew.-%, insbesondere 0 bis 20 Gew.-% weitere elektrisch leitende Komponenten; 0 bis 80 Gew.-%, insbesondere 5 bis 30 Gew.-% Graphit; 0 bis 25 Gew.-%, insbesondere 5 bis 15 Gew.-% Bindemittel; und gegebenenfalls 0 bis 80 Gew.-%, insbesondere 0,1 bis 5 Gew.-% Additive; wobei sich die Angaben in Gew.-% auf das Gesamtgewicht des Anodenmaterials beziehen und sich die Anteile aller Bestandteile des Anodenmaterials auf 100 Gew.-% aufsummieren.

In einer bevorzugten Rezeptur für das Anodenmaterial ist der Anteil von Graphitpartikeln und weiteren elektrisch leitenden Komponenten in Summe mindestens 10 Gew.-%, bezogen auf das Gesamtgewicht des Anodenmaterials.

Ein weiterer Gegenstand der Beschreibung sind Lithium-Ionen-Batterien umfassend eine Kathode, eine Anode, einen Separator und einen Elektrolyt, dadurch gekennzeichnet, dass die Anode auf dem vorgenannten, erfindungsgemäßen Anodenmaterial basiert.

Neben den Kohlenstoff-beschichteten Siliciumpartikeln können zur Herstellung der erfindungsgemäßen Anodenmaterialien und Lithium-Ionen-Batterien die hierfür gängigen Ausgangsmaterialien eingesetzt werden und die hierfür üblichen Verfahren zur Herstellung der Anodenmaterialien und Lithium-Ionen-Batterien Anwendung finden, wie beispielsweise in der Patentanmeldung mit der Anmeldenummer DE 102015215415.7 beschrieben.

Ein weiterer Gegenstand der Beschreibung sind Lithium-Ionen-Batterien umfassend eine Kathode, eine Anode, einen Separator und einen Elektrolyt, dadurch gekennzeichnet, dass die Anode auf dem vorgenannten, Anodenmaterial basiert;
und das Anodenmaterial der vollständig geladenen Lithium-Ionen-Batterie nur teilweise lithiiert ist.

Ein weiterer Gegenstand der Beschreibung sind Verfahren zum Betreiben von Lithium-Ionen-Batterien umfassend eine Kathode, eine Anode, einen Separator und einen Elektrolyt, dadurch gekennzeichnet, dass
die Anode auf dem vorgenannten, Anodenmaterial basiert; und
das Anodenmaterial beim vollständigen Laden der Lithium-Ionen-Batterie nur teilweise lithiiert wird.

Ein weiterer Gegenstand der Beschreibung ist die Verwendung der Anodenmaterialien in Lithium-Ionen-Batterien, die so konfiguriert sind, dass die Anodenmaterialien im vollständig geladenen Zustand der Lithium-Ionen-Batterien nur teilweise lithiiert sind.

Bevorzugt ist also, dass das Anodenmaterial, insbesondere die Kohlenstoff-beschichteten Siliciumpartikel, in der vollständig geladenen Lithium-Ionen-Batterie nur teilweise lithiiert ist. Vollständig geladen bezeichnet den Zustand der Batterie, in dem das Anodenmaterial der Batterie ihre höchste Beladung an Lithium aufweist. Teilweise Lithiierung des Anodenmaterials bedeutet, dass das maximale Lithiumaufnahmevermögen der Siliciumpartikel im Anodenmaterial nicht ausgeschöpft wird. Das maximale Lithiumaufnahmevermögen der Siliciumpartikel entspricht allgemein der Formel Li_{4.4}Si und beträgt somit 4,4 Lithiumatome pro Siliciumatom. Dies entspricht einer maximalen spezifischen Kapazität von 4200 mAh pro Gramm Silicium.

Das Verhältnis der Lithiumatome zu den Siliciumatomen in der Anode einer Lithium-Ionen-Batterie (Li/Si-Verhältnis) kann beispielsweise über den elektrischen Ladungsfluss eingestellt werden. Der Lithiierungsgrad des Anodenmaterials beziehungsweise der im Anodenmaterial enthaltenen Siliciumpartikel ist proportional zur geflossenen elektrischen Ladung. Bei dieser Variante wird beim Laden der Lithium-Ionen-Batterie die Kapazität des Anodenmaterials für Lithium nicht voll ausgeschöpft. Dies resultiert in einer teilweisen Lithiierung der Anode.

Bei einer alternativen, bevorzugten Variante wird das Li/Si-Verhältnis einer Lithium-Ionen-Batterie durch das Zellbalancing eingestellt. Hierbei werden die Lithium-Ionen-Batterien so ausgelegt, dass das Lithiumaufnahmevermögen der Anode vorzugsweise größer ist als das Lithiumabgabevermögen der Kathode. Dies führt dazu, dass in der vollständig geladenen Batterie das Lithiumaufnahmevermögen der Anode nicht voll ausgeschöpft ist, d.h. dass das Anodenmaterial nur teilweise lithiiert ist.

Bei der erfindungsgemäßen teilweisen Lithiierung beträgt das Li/Si-Verhältnis im Anodenmaterial im vollständig geladenen Zustand der Lithium-Ionen-Batterie vorzugsweise ≤ 2,2, besonders bevorzugt ≤ 1,98 und am meisten bevorzugt ≤ 1,76. Das Li/Si-Verhältnis im Anodenmaterial im vollständig geladenen Zustand der Lithium-Ionen-Batterie ist vorzugsweise ≥ 0,22, besonders bevorzugt ≥ 0,44 und am meisten bevorzugt ≥ 0,66.

Die Kapazität des Siliciums des Anodenmaterials der Lithium-Ionen-Batterie wird vorzugsweise zu ≤ 50%, besonders bevorzugt zu ≤ 45% und am meisten bevorzugt zu ≤ 40% genutzt, bezogen auf eine Kapazität von 4200 mAh pro Gramm Silicium.

Der Lithiierungsgrad von Silicium beziehungsweise die Ausnutzung der Kapazität von Silicium für Lithium (Si-Kapazitätsnutzung α) kann beispielsweise bestimmt werden, wie in der Patentanmeldung mit der Anmeldenummer DE 102015215415.7 auf Seite 11, Zeile 4 bis Seite 12, Zeile 25 beschrieben, insbesondere an Hand der dort genannten Formel für die Si-Kapazitätsnutzung α und den ergänzenden Angaben unter den Überschriften "Bestimmung der Delithiierungs-Kapazität β" und "Bestimmung des Si-Gewichtsanteils ω_{Si}" ("incorporated by reference").

Der Einsatz der Kohlenstoff-beschichteten Siliciumpartikel in Lithium-Ionen-Batterien führt überraschenderweise zu einer Verbesserung von deren Zyklenverhalten. Solche Lithium-Ionen-Batterien haben einen geringen irreversiblen Kapazitätsverlust im ersten Ladezyklus und ein stabiles elektrochemisches Verhalten mit nur geringfügigem Fading in den Folgezyklen. Mit den Kohlenstoff-beschichteten Siliciumpartikeln kann also ein niedriger initialer Kapazitätsverlust und zudem ein niedriger kontinuierlicher Kapazitätsverlust der Lithium-Ionen-Batterien erreicht werden. Insgesamt weisen die Lithium-Ionen-Batterien eine sehr gute Stabilität auf. Dies bedeutet, dass auch bei einer Vielzahl an Zyklen kaum Ermüdungserscheinungen, wie beispielsweise in Folge von mechanischer Zerstörung des Anodenmaterials oder SEI, auftreten.

Überraschenderweise können mit den Kohlenstoff-beschichteten Siliciumpartikeln Lithium-Ionen-Batterien erhalten werden, die neben dem vorgenannten vorteilhaften Zyklenverhalten zugleich noch eine hohe volumetrische Energiedichte besitzen.

Mit erfindungsgemäßen Kohlenstoff-beschichteten Siliciumpartikeln können bereits ohne Verdichtung oder mit geringer Verdichtung Anoden mit hohen volumetrischen Kapazitäten erreicht werden. Anoden mit herkömmlichen, aggregierten Kohlenstoff-beschichteten Siliciumpartikeln bedürfen einer Verdichtung, um die gewünschten volumetrischen Kapazitäten zu erzielen, was allerdings mit einem Einbruch der elektrochemischen Performance (Zyklenfestigkeit) einhergeht.

Darüber hinaus haben die erfindungsgemäßen Kohlenstoff-beschichteten Siliciumpartikel vorteilhafterweise eine hohe elektrische Leitfähigkeit und eine hohe Beständigkeit gegenüber korrosiven Medien, wie beispielsweise organischen Lösungsmitteln, Säuren oder Laugen. Auch der Zellinnenwiderstand von Lithium-Ionen-Batterien kann mit erfindungsgemäßen Kohlenstoffbeschichteten Siliciumpartikeln reduziert werden.

Zudem sind die erfindungsgemäßen Kohlenstoff-beschichteten Siliciumpartikel in Wasser, insbesondere in wässrigen Tintenformulierungen für Anoden von Lithiumionen-Batterien, in überraschender Weise stabil, so dass die unter solchen Bedingungen mit herkömmlichen Silciumpartikeln auftretende Wasserstoffentwicklung reduziert werden kann. Dies ermöglicht eine Verarbeitung ohne ein Aufschäumen der wässrigen Tintenformulierung und die Herstellung von besonders homogenen bzw. Gasblasen-freien Anoden. Die im erfindungsgemäßen Verfahren als Edukt eingesetzten Siliciumpartikel generieren dagegen in Wasser große Mengen an Wasserstoff.

Mit aggregierten Kohlenstoff-beschichteten Siliciumpartikeln, wie sie beispielsweise beim Beschichten von Siliciumpartikeln mit Kohlenstoff unter Einsatz von Lösungsmitteln oder mit nicht-erfindungsgemäßen Trockenverfahren oder nicht-erfindungsgemäßen CVD-Verfahren erhalten werden, können solche vorteilhaften Effekte nicht oder nicht im erfindungsgemäßen Umfang erzielt werden.

Die nachfolgenden Beispiele dienen zur weiteren Erläuterung der Erfindung.

Sofern nicht anders angegeben, wurden die nachstehenden (Vergleichs)Beispiele an Luft und bei Umgebungsdruck (1013 mbar) sowie Raumtemperatur (23°C) durchgeführt. Die nachfolgenden Methoden und Materialien kamen zum Einsatz.

### Carbonisierung:

Die Carbonisierung erfolgte mit einem 1200°C Drei-Zonen Rohrofen (TFZ 12/65/550/E301) der Fa. Carbolite GmbH unter Verwendung einer Kaskadenregelung inklusive eines Probenthermoelements Typ N. Die angegebenen Temperaturen beziehen sich auf die Innentemperatur des Rohrofens am Ort des Thermoelements. Das jeweils zu carbonisierende Ausgangsmaterial wurde in ein oder mehrere Verbrennungsschiffchen aus Quarzglas (QCS GmbH) eingewogen und in ein Arbeitsrohr aus Quarzglas eingebracht. Die für die Carbonisierungen verwendeten Einstellungen und Prozessparameter sind in den jeweiligen Beispielen angegeben.

### CVD-Reaktor:

Der verwendete 1000°C CVD-Reaktor (HTR 11/150) der Fa. Carbolite GmbH besteht aus einer Quarzglastrommel, die in einem elektrisch beheizten Drehrohrofen mit Keramikauskleidung liegt und dort temperiert wird. Die Aufheizrate entlang der Reaktionszone beträgt zwischen 10 und 20 K/min, die beheizte Trommel weist in der Reaktionszone eine gleichmäßige Temperaturverteilung auf. Die angegebenen Temperaturen beziehen sich auf die Sollinnentemperatur der Trommel am Ort des Thermoelements.

Die Glastrommel ist bei geschlossenem Ofendeckel gegenüber der Raumluft thermisch isoliert. Die Glastrommel wird während des Prozesses gedreht (315°, Oszillationsfrequenz 6 - 8/min) und besitzt an der Wandung Ausbuchtungen, die für eine zusätzliche Durchmischung des Pulvers sorgen. An die Quarzglastrommel ist die Gasführung angeschlossen. Dort kann über einen By-Pass das mittels Thermostat temperierte Bubbler-Gefäß für die Erzeugung von Precursor-Dampf zugeschaltet werden. Entstehende Nebenprodukte und Spülgase werden in das gegenüberliegende Abgasrohr abgesaugt. Die für die chemische Gasphasenabscheidung verwendeten Einstellungen und Prozessparameter variieren je nach eingesetztem Prekursor.

### Klassierung/Siebung:

Die nach der Carbonsierung bzw. chemischen Gasphasenabscheidung erhaltenen C-beschichteten Si-Pulver wurden durch Nassiebung mit einer Siebmaschine AS 200 basic (Retsch GmbH) mit Wasser an Edelstahlsieben von Überkorn > 20 µm befreit. Das pulvrige Produkt wurde in Ethanol mittels Ultraschall (Hielscher UIS250V; Amplitude 80%, Cycle: 0,75; Dauer: 30 min) dispergiert (20% Feststoffgehalt) und auf den Siebturm mit einem Sieb (20 µm) aufgebracht. Die Siebung wurde mit einer unendlichen Zeitvorwahl und einer Amplitude von 50 bis 70% bei durchlaufendem Wasserstrom durchgeführt. Die unten austretende Silicium-haltige Suspension wurde über 200 nm-Nylonmembran filtriert, und der Filterrückstand im Vakuumtrockenschrank bei 100°C und 50 bis 80 mbar bis zur Massenkonstanz getrocknet.

Folgende analytische Methoden und Geräte wurden zur Charakterisierung der erhaltenen C-beschichteten Si-Partikel eingesetzt:

### Rasterelektronemikroskopie (REM/ EDX):

Die mikroskopischen Untersuchungen wurden mit einem Rasterelektronemikroskop Zeiss Ultra 55 und einem energiedispersvem Röntgenspektrometer INCA x-sight durchgeführt. Die Proben wurden vor der Untersuchung zur Verhinderung von Aufladungsphänomenen mit einem Baltec SCD500 Sputter-/Carbon-Coating mit Kohlenstoff bedampft.

### Transmissionselektronemikroskopie (TEM):

Die Analyse der Schichtdicke sowie der Kohlenstoffkonfiguration wurde an einem Transmissionselektronenmikroskop Libra 120 der Firma Zeiss durchgeführt. Die Probenpräparation erfolgte entweder durch Einbetten in eine Harzmatrix und anschließendem Mikrotom-Schnitt oder direkt aus dem Pulver. Dabei wurde eine Spatelspitze jeder Probe in 2 ml Isopropanol mittels Ultraschall dispergiert und auf ein Kupfergrid aufgetragen. Dieses wurde für 1 min auf einer Heizplatte mit 100°C von beiden Seiten getrocknet.

### Anorganische Analytik / Elementaranalyse:

Die C-Gehalte wurden mit einem Leco CS 230 Analysator ermittelt, zur Bestimmung von O- und N-Gehalten wurde ein Leco TCH-600 Analysator eingesetzt. Die qualitative und quantitative Bestimmung von anderen Elementen in den erhaltenenen Kohlenstoff-beschichteten Siliciumpartikeln wurde mittels ICP (inductively coupled plasma)-Emissionspektrometrie (Optima 7300 DV, Fa. Perkin Elmer) durchgeführt. Die Proben wurden dazu in einer Mikrowelle (Microwave 3000, Fa. Anton Paar) sauer aufgeschlossen (HF/HNO₃). Die ICP-OES-Bestimmung orientiert sich an der ISO 11885 "Wasserbeschaffenheit - Bestimmung von ausgewählten Elementen durch induktiv gekoppelte Plasma-Atom-Emissionsspektrometrie (ICP-OES) (ISO 11885:2007); Deutsche Fassung EN ISO 11885:2009", die zur Untersuchung saurer, wässriger Lösungen eingesetzt wird (z.B. angesäuerte Trinkwasser-, Abwasser- und andere Wasserproben, Königswasserextrakte von Böden und Sedimenten).

### Partikelgrößenbestimmung:

Die Bestimmung der Partikelgrößenverteilung erfolgte nach ISO 13320 mittels statischer Laserstreuung mit einem Horiba LA 950. Dabei muss bei der Vorbereitung der Proben besondere Sorgfalt auf die Dispergierung der Partikel in der Messlösung aufgewendet werden, um statt Einzelpartikel nicht die Größe von Agglomeraten zu messen. Für die hier untersuchten C-beschichteten Si-Partikel wurden die Partikel in Ethanol dispergiert. Dazu wurde die Dispersion vor der Messung bei Bedarf 4 min in einem Hielscher Ultraschall-Laborgerät Modell UIS250v mit Sonotrode LS24d5 mit 250 W Ultraschall behandelt.

### Oberflächenmessung nach BET:

Die spezifische Oberfläche der Materialien wurde über Gasadsorption mit Stickstoff mit einem Gerät Sorptomatic 199090 (Porotec) oder Gerät SA-9603MP (Horiba) nach der BET-Methode gemäß DIN ISO 9277:2003-05 gemessen.

### Si-Zugänglichkeit gegenüber flüssigen Medien:

Die Bestimmung der Zugänglichkeit von Silicium in den C-beschichteten Si-Partikeln gegenüber flüssigen Medien wurde mit folgender Testmethode an Materialien mit bekanntem Silicium-Gehalt (aus Elementaranalyse) durchgeführt:
0.5 bis 0.6 g C-beschichtetes Silicium wurden mit 20 ml einer Mischung aus NaOH (4 M; H₂O) und Ethanol (1:1 vol.) zunächst mittels Ultraschall dispergiert und anschließend 120 min bei 40°C gerührt. Die Partikel wurden über 200 nm Nylonmembran filtriert, mit Wasser zum Neutral-pH gewaschen und anschließend im Trockenschrank bei 100°C / 50 bis 80 mbar getrocknet. Der Silicium-Gehalt nach der NaOH-Behandlung wurde bestimmt und mit dem Si-Gehalt vor dem Test verglichen. Die Dichtigkeit entspricht dem Quotienten aus dem Si-Gehalt der Probe in Prozent nach Laugebehandlung und dem Si-Gehalt in Prozent der unbehandelten C-beschichteten Partikel.

### Bestimmung der Pulverleitfähigkeit:

Der spezifische Widerstand der C-beschichteten Proben wurde in einem Messsystem der Fa. Keithley, 2602 System Source Meter ID 266404, bestehend aus einer Druckkammer (Stempelradius 6 mm) und einer Hydraulikeinheit (Fa. Caver, USA, Modell 3851CE-9; S/N: 130306), unter kontrolliertem Druck (bis zu 60 MPa) bestimmt.

### Bestimmung der Gasentwicklung:

### a) durch GC Messung (Headspace):

Zur Bestimmung der Wasserstoffentwicklung der Siliciumpulver wurden 50 mg der Probe in ein GC-Headspace Gläschen (22 ml Volumen) eingewogen und mit 5 ml eines Li-Acetat Puffers (pH 7; 0,1 M) versetzt, das Gläschen verschlossen und für 30 Minuten unter Rühren in einem Aluminiumblock auf 80°C erhitzt. Die Bestimmung des Wasserstoffgehalts in der Gasphase wurde mittels GC-Messung durchgeführt. Detektiert wurde über Wärmeleitfähigkeitsdetektion. Die Angabe des Wasserstoffanteils erfolgte in Volumenprozent der Gasphase. Die weiterhin detektierten Gase waren Sauerstoff, Stickstoff und Argon.

### b) durch Messung des Druckaufbaus in einem geschlossenen System:

Zur Bestimmung des Druckaufbaus in einem geschlossenen System wurde in einem dicht verschließbaren Glasrohr, welches bis Drücken von etwa 10 bar ausgelegt war, 200 mg Silicium Pulver eineingelegt und mit 20 ml eines Li-Acetat Puffers (pH 7; 0,1 M) versetzt und anschließend in einem Aluminiumblock für 60 Minuten auf 80°C erhitzt und der Druckaufbau abgelesen. Die Messung erfolgte über ein digitales Manometer. Die Messwerte wurden um den Druckaufbau des eingesetzten Puffers ohne Silizium Pulver (Blindwert) korrigiert.

### Beispiel 1 (Bsp. 1): unbeschichtetes Mikro-Si:

Das Siliciumpulver wurde nach dem Stand der Technik durch Mahlung eines groben Si-Splitts aus der Produktion von Solarsilicium in einer Fließbettstrahlmühle (Netzsch-Condux CGS16 mit 90 m³/h Stickstoff bei 7 bar als Mahlgas) hergestellt.

Die Partikelgrößenbestimmung erfolgte in einer stark verdünnten Suspension in Ethanol.

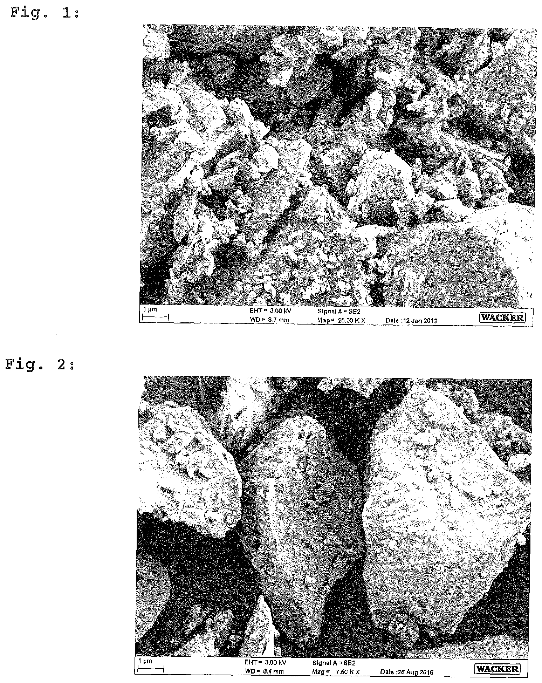

Die REM-Aufnahme (7.500fache Vergrößerung) des trockenen Si-Staubs in der Fig. 1 zeigt, dass die Probe aus einzelnen, nicht aggregierten, splitterförmigen Partikeln besteht.
Elementare Zusammensetzung: Si ≥ 98 Gew-%; C 0,10 Gew.-%; H < 0,01 Gew.-%; O 0,21 Gew-%.
Partikelgrößenverteilung: Monomodal; D₁₀: 2,77 µm, D₅₀: 5,27 µm, D₉₀: 8,76 µm; (D₉₀ - D₁₀)/D₅₀ = 1,14; (D₉₀-D₁₀) = 6,0 µm.
Spezifische Oberfläche (BET): 2.231 m²/g.
Si-Dichtigkeit:0%.
Pulverleitfähigkeit: 95.89 µS/cm.
Gasentwicklung: 4,43 Vol.-% Wasserstoff (Methode a); 3,71 bar (Methode b).

### Beispiel 2 (Bsp. 2):

### C-beschichtetes Mikro-Si (Trockenverfahren):

238,00 g des Silicium-Pulvers aus Beispiel 1 (D₅₀ = 5,27 µm) und 13,00 g Pech (Petromasse ZL 250M) wurden bei 80 rpm für 3 h mechanisch mittels Kugelmühlen-Rollbank (Siemens/ Groschopp) gemischt.

248,00 g der Si/Pech-Mischung wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenthermoelements Typ N mit Stickstoff/H₂ als Inertgas carbonisiert:
Zuerst Heizrate 10°C/min, Temperatur 350°C, Haltedauer 30 min (Pech war vollständig geschmolzen), N₂/H₂-Flussrate 200 ml/min; danach direkt weiter mit Heizrate 3°C/min, Temperatur 550°C; dann direkt weiter mit Heizrate 10°C/min, Temperatur 1000°C, dann Haltedauer 2 h, N₂/H₂-Flussrate 200 ml/min.

Nach dem Abkühlen wurden 242,00 g eines schwarzen Pulvers erhalten (Carbonisierungsausbeute 98%), welches mittels Nasssiebung von Überkorn befreit wurde. Es wurden 239,00 g C-beschichtete Si-Partikel mit einer Partikelgröße von D₉₉ < 20 µm erhalten.

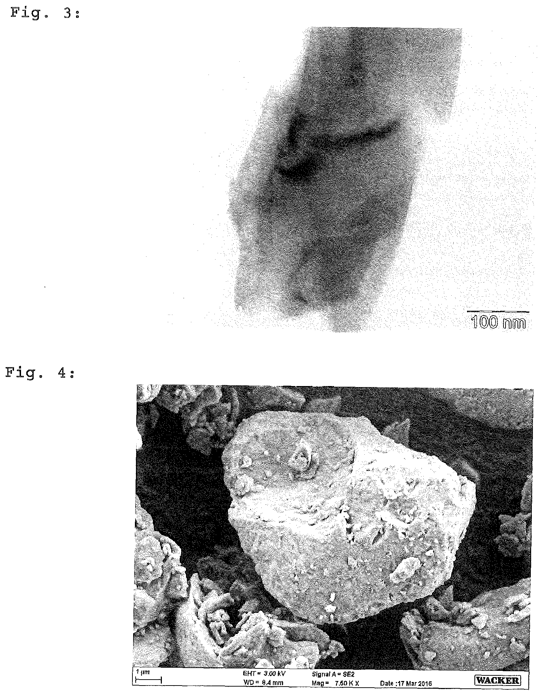

Fig. 2 zeigt eine REM-Aufnahme (7.500fache Vergrößerung) und Fig. 3 eine TEM-Aufnahme (40.000fache Vergrößerung) der erhaltenen C-beschichteten Si-Partikel.
Elementare Zusammensetzung: Si ≥ 94 Gew-%; C 2,88 Gew.-%; H 0,01 Gew.-% O 0,44 Gew-%; N 0 Gew-%.
Partikelgrößenverteilung: Monomodal; D₁₀: 3,46 µm, D₅₀: 5,52 µm, D₉₀: 8,59 µm; (D₉₀ - D₁₀) /D₅₀ = 0,93.
Spezifische Oberfläche (BET): 1,20 m²/g.
Si-Dichtigkeit: ∼100%.
Pulverleitfähigkeit: 20003,08 µS/cm.
Gasentwicklung: Keine H₂-Entwicklung (Methode a); kein Druckaufbau (Methode b).

### Beispiel 3 (Bsp. 3): unbeschichtetes Mikro-Si:

Das Siliciumpulver wurde nach dem Stand der Technik durch Mahlung eines groben Si-Splitts aus der Produktion von Solarsilicium in einer Fließbettstrahlmühle (Netzsch-Condux CGS16 mit 90 m³/h Stickstoff bei 7 bar als Mahlgas) hergestellt.

Die Partikelgrößenbestimmung erfolgte in einer stark verdünnten Suspension in Ethanol.
Elementare Zusammensetzung: Si ≥ 99 Gew-%; C < 0,1 Gew.-%; O 0,34 Gew-%; N < 0,1 Gew-%.
Partikelgrößenverteilung: Monomodal; D₁₀: 2,23 µm, D₅₀: 4,45 µm, D₉₀: 7,78 µm; (D₉₀ - D₁₀)/D₅₀ = 1,25; (D₉₀-D₁₀) = 5,5 µm. Spezifische Oberfläche (BET): 2,4 m²/g.
Si-Dichtigkeit: 0%.
Pulverleitfähigkeit: 94,39 µS/cm.
**Beispiel 4 (Bsp. 4):**

### C-beschichtetes Mikro-Si (Trockenverfahren):

270,00 g des Silicium-Pulvers aus Beispiel 3 (D₅₀ = 4,45 µm) und 30,00 g Polyacrylnitril (PAN) wurden bei 80 rpm für 3 h mechanisch mittels Kugelmühlen-Rollbank (Siemens/Groschopp) gemischt.
298,00 g der Si/PAN-Mischung wurde in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenthermoelements Typ N mit Stickstoff/H₂ als Inertgas carbonisiert:
   Zuerst Heizrate 10°C/min, Temperatur 300°C, Haltedauer 90 min (Pech war vollständig geschmolzen), N₂/H₂-Flussrate 200 ml/min; danach direkt weiter mit Heizrate 10°C/min, Temperatur 1000°C, Haltedauer 3 h, N₂/H₂-Flussrate 200 ml/min.

Nach dem Abkühlen wurden 280,00 g eines schwarzen Pulvers erhalten (Carbonisierungsausbeute 94%), welches mittels Nasssiebung von Überkorn befreit wurde. Es wurden 267,00 g C-beschichtete Si-Partikel mit einer Partikelgröße von D99 < 20 µm erhalten.

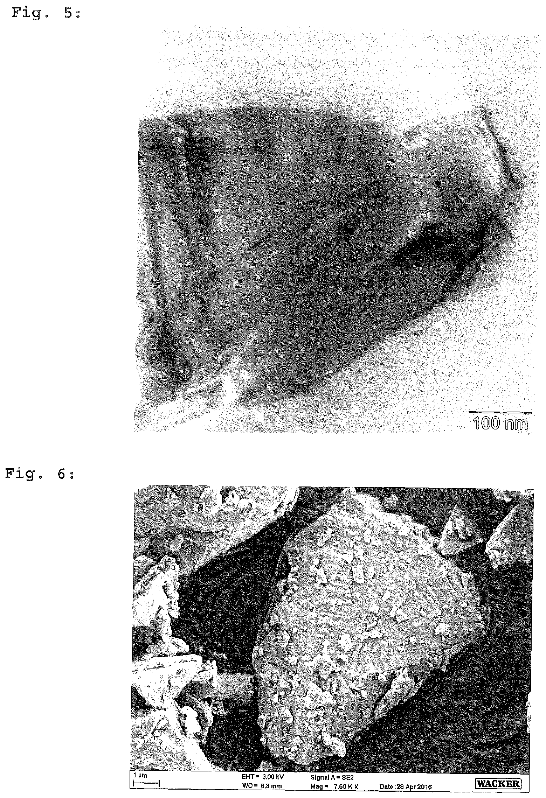

Fig. 4 zeigt eine REM-Aufnahme (7.500fache Vergrößerung) und Fig. 5 eine TEM-Aufnahme (40.000fache Vergrößerung) der erhaltenen C-beschichteten Si-Partikel.
Elementare Zusammensetzung: Si ≥ 94 Gew-%; C 5,01 Gew.-%; O 0,61 Gew-%; N 0,3 Gew-%.
Partikelgrößenverteilung: Monomodal; D₁₀: 2,35 µm, D₅₀: 4,51 µm, D₉₀: 8,01 µm; (D₉₀ - D₁₀)/D₅₀ = 1,26.
Spezifische Oberfläche (BET): 1,3 m²/g.
Si-Dichtigkeit: ∼100%.
Pulverleitfähigkeit: 50678,78 µS/cm.
Gasentwicklung: Keine H₂-Entwicklung (Methode a); kein Druckaufbau (Methode b).

### Beispiel 5 (Bsp. 5):

### erfindungsgemäße Anode mit C-beschichtetem Mikro-Si aus Beispiel 4:

29,71 g Polyacrylsäure (bei 85°C bis zur Gewichtskonstanz getrocknet; Sigma-Aldrich, M_{w} ∼450.000 g/mol) und 756.60 g deionisiertes Wasser wurden mittels Schüttler (290 1/min) für 2.5 h bis zur vollständigen Lösung der Polyacrylsäure bewegt. Zu der Lösung wurde Lithiumhydroxid Monohydrat (Sigma-Aldrich) portionsweise hinzugegeben, bis der pH-Wert bei 7,0 lag (gemessen mit pH-Meter WTW pH 340i und Sonde SenTix RJD). Die Lösung wurde anschließend mittels Schüttler weitere 4 h durchmischt. 7,00 g der nicht-aggregierten kohlenstoffbeschichteten Siliciumpartikel aus Beispiel 2 wurden dann in 12,50 g der neutralisierten Polyacrylsäure-Lösung und 5,10 g deionisiertem Wasser mittels Dissolver bei einer Umlaufgeschwindigkeit von 4,5 m/s für 5 min und von 12 m/s für 30 min unter Kühlung bei 20°C dispergiert. Nach Zugabe von 2,50 g Graphit (Imerys, KS6L C) wurde weitere 30 min bei einer Umlaufgeschwindigkeit von 12 m/s gerührt. Nach Entgasen wurde die Dispersion mittels eines Filmziehrahmens mit 0,20 mm Spalthöhe (Erichsen, Modell 360) auf eine Kupferfolie mit Dicke von 0,03 mm (Schlenk Metallfolien, SE-Cu58) aufgebracht. Die so hergestellte Anodenbeschichtung wurde anschließend 60 min bei 50°C und 1 bar Luftdruck getrocknet.

Das mittlere Flächengewicht der trockenen Anodenbeschichtung betrug 2,90 mg/cm² und die Beschichtungsdichte 0,8 g/cm³.

### Beispiel 6 (Bsp. 6):

### erfindungsgemäße Lithium-Ionen-Batterie mit der Anode aus Beispiel 5:

Die elektrochemischen Untersuchungen wurden an einer Knopfzelle (Typ CR2032, Hohsen Corp.) in 2-Elektroden-Anordnung durchgeführt. Die Elektrodenbeschichtung aus Beispiel 5 wurde als Gegenelektrode bzw. negative Elektrode (Dₘ = 15 mm) eingesetzt, eine Beschichtung auf Basis von Lithium-Nickel-Mangan-Kobaltoxid 6:2:2 mit Gehalt von 94,0 % und mittlerem Flächengewicht von 14,8 mg/cm² (bezogen von der Firma Custom Cells) als Arbeitselektrode bzw. positive Elektrode (Dₘ = 15 mm) verwendet. Ein mit 120 µl Elektrolyt getränktes, Glasfaser-Filterpapier (Whatman, GD Type D) diente als Separator (Dₘ = 16 mm) . Der verwendete Elektrolyt bestand aus einer 1,0-molaren Lösung von Lithiumhexafluorophosphat in einem 3:7 (v/v) Gemisch von Fluorethylencarbonat und Ethylmethylcarbonat, welche mit 2,0 Gew.-% Vinylencarbonat versetzt war. Der Bau der Zelle erfolgte in einer Glovebox (< 1 ppm H₂O, O₂), der Wassergehalt in der Trockenmasse aller verwendeten Komponenten lag unterhalb von 20 ppm.

Die elektrochemische Testung wurde bei 20°C durchgeführt. Das Laden der Zelle erfolgte im cc/cv-Verfahren (constant current / constant voltage) mit konstantem Strom von 5 mA/g (entspricht C/25) im ersten Zyklus und von 60 mA/g (entspricht C/2) in den darauffolgenden Zyklen und nach Erreichen der Spannungsgrenze von 4,2 V mit konstanter Spannung bis Unterschreiten eines Stroms von 1,2 mA/g (entspricht C/100) bzw. 15 mA/g (entspricht C/8). Das Entladen der Zelle erfolgte im cc-Verfahren (constant current) mit konstantem Strom von 5 mA/g (entspricht C/25) im ersten Zyklus und von 60 mA/g (entspricht C/2) in den darauffolgenden Zyklen bis Erreichen der Spannungsgrenze von 3,0 V. Der gewählte spezifische Strom bezog sich auf das Gewicht der Beschichtung der positiven Elektrode.

Auf Grund der Rezeptierung in den Beispielen 5 und 6 wurde die Lithium-Ionen-Batterie durch Zellbalancing unter Teil-Lithiierung der Anode betrieben.

Die Vollzelle hatte im zweiten Zyklus eine reversible Anfangskapazität von 2,03 mAh/cm² und besaß nach 220 Lade-/Entladezyklen noch 80 % ihrer ursprünglichen Kapazität.

### Vergleichsbeispiel 7 (VBsp. 7):

### nicht-erfindungsgemäße Anode mit dem unbeschichteten Mikro-Si aus Beispiel 3:

Mit den Siliciumpartikeln aus Beispiel 3 wurde wie in Beispiel 5 beschrieben eine Anode hergestellt.

Das mittlere Flächengewicht der so hergestellten Anodenbeschichtung betrug 2,94 mg/cm² und die Beschichtungsdichte 0,9 g/cm³.

### Vergleichsbeispiel 8 (VBsp. 8):

### nicht-erfindungsgemäße Lithium-Ionen-Batterie mit der Anode aus Vergleichsbeispiel 7:

Die Anode aus Vergleichsbeispiel 7 enthaltend nicht beschichtete Siliciumpartikel wurde wie in Beispiel 6 beschrieben getestet.

Auf Grund der Rezeptierung in den Vergleichsbeispielen 7 und 8 wurde die Lithium-Ionen-Batterie durch Zellbalancing unter Teil-Lithiierung der Anode betrieben.

Die Vollzelle hatte im zweiten Zyklus eine reversible Anfangskapazität von 2,03 mAh/cm² und besaß nach 203 Lade-/Entladezyklen nur noch 80% ihrer ursprünglichen Kapazität.

### Beispiel 9 (Bsp. 9): C-beschichtetes Mikro-Si (CVD-Verfahren):

20,00 g des Silicium-Pulvers aus Beispiel 1 (D₅₀ = 5,27 µm) wurden bei Raumtemperatur in das Glasrohr des CVD-Reaktors (HTR 11/150) der Fa. Carbolite GmbH überführt. Nach dem Einfüllen der Probe folgte eine Spülprozedur mit den Prozessgasen (10 min Argon 3 slm; 3 min Ethen und H₂ je 1 slm, 5 min Argon 3 slm). Mit einer Heizrate von 20 K/min wurde die Reaktionszone auf 900°C geheizt. Bereits während des Spülens und Aufheizens wurde das Rohr gedreht (315° mit einer Oszillationsfrequenz von 8/min) und das Pulver durchmischt. Nach Erreichen der Solltemperatur schloss sich eine Haltezeit von 10 min an. Die CVD-Beschichtung wurde für 30 min Reaktionszeit mit einem Gesamtgasstrom von 3,6 slm mit folgender Gaszusammensetzung durchgeführt:
2 Mol Ethen, 0,3 slm, 8,33 Vol.-%; Argon 2,4 slm, 66,67 Vol.-%; H₂ 0,9 slm, 26 Vol.-%.

Nach dem Abkühlen wurden 15,00 g eines schwarzen Pulvers erhalten (Ausbeute 75%), welches mittels Nasssiebung von Überkorn befreit wurde. Es wurden 14,50 g C-beschichtete Si-Partikel mit einer Partikelgröße von D99 < 20 µm erhalten.

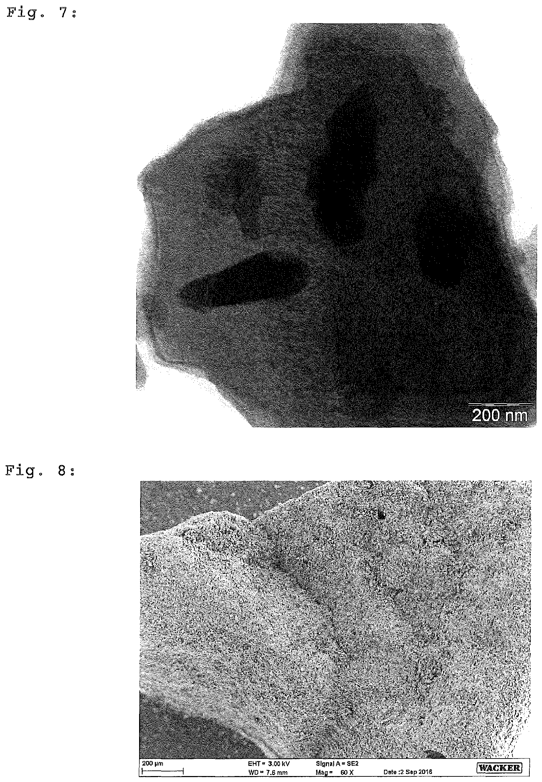

Fig. 6 zeigt eine REM-Aufnahme (7.500fache Vergrößerung) und Fig. 7 eine TEM-Aufnahme (20.000fache Vergrößerung) der erhaltenen C-beschichteten Si-Partikel.
Elementare Zusammensetzung: Si ≥ 94 Gew-%; C 2,54 Gew.-%; H < 0,01 Gew.-%; O 0,10 Gew-%; N < 0,01 Gew-%.
Partikelgrößenverteilung: Monomodal; D₁₀: 2,79 µm, D₅₀: 5,26 µm, D₉₀: 8,77 µm; (D₉₀ - D₁₀)/D₅₀ = 1,44.
Spezifische Oberfläche (BET): 2,10 m²/g.
Si-Dichtigkeit: ∼100%.
Pulverleitfähigkeit: 818267,37 µS/cm.
Gasentwicklung: Keine H₂-Entwicklung (Methode a); kein Druckaufbau (Methode b).

### Vergleichsbeispiel 10 (VBsp. 10):

### aggregiertes C-beschichtetes Mikro-Si (Pech-basiert aus Toluol):

3,00 g Pech (Petromasse ZL 250M) wurden bei Raumtemperatur in 100 ml Toluol gelöst und für 24 h gerührt. 70,00 g des Silicium-Pulvers aus Beispiel 1 (D₅₀ = 5,27 µm) wurden mittels Ultraschall in die Pech-Lösung dispergiert (Hielscher UIS250V; Amplitude 80%, Cycle: 0,9; Dauer: 60 min). Nach Entfernen des Lösemittels unter reduziertem Druck wurden 70,00 g eines schwarzen Pulvers erhalten.

69,00 g des Si/Pech-Pulvers wurde in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenthermoelements Typ N mit Stickstoff/H₂ als Inertgas carbonisiert:
Zuerst Heizrate 10°C/min, Temperatur 350°C, Haltedauer 30 min, N₂/H₂-Flussrate 200 ml/min; danach direkt weiter mit Heizrate 3°C/min, Temperatur 550°C; dann direkt weiter mit Heizrate 10°C/min, Temperatur 1000°C, dann Haltedauer 2 h, N₂/H₂-Flussrate 200 ml/min.

Nach dem Abkühlen wurden 68,00 g eines schwarzen Pulvers erhalten (Carbonisierungsausbeute 98%), welches mittels Nasssiebung von Überkorn befreit wurde. Es wurden 5,00 g C-beschichtete Si-Partikel mit einer Partikelgröße von D₉₉ < 20 µm erhalten.

Fig. 8 zeigt eine REM-Aufnahme (7.500fache Vergrößerung) der erhaltenen C-beschichteten Si-Partikel.
Elementare Zusammensetzung: Si ≥ 93 Gew-%; C 2,05 Gew.-%; H 0,02 Gew.-% O 0,46 Gew-%; N < 0,01 Gew-%.
Partikelgrößenverteilung: Monomodal; D₁₀: 3,61 µm, D₅₀: 5,88 µm, D₉₀: 9,29 µm; (D₉₀ - D₁₀)/D₅₀ = 0,97.
Spezifische Oberfläche (BET): 1,33 m²/g.
Si-Dichtigkeit: < 1%.
Pulverleitfähigkeit: 3413,97 µS/cm.

### Vergleichsbeispiel 11 (VBsp. 11):

### aggregiertes C-beschichtetes Mikro-Si (PAN-basiert aus DMF):

5,00 g Polyacrylnitril (PAN) wurden bei Raumtemperatur in 333 ml Dimethylformamid (DMF) gelöst. 8,00 g des Silicium-Pulvers aus Beispiel 3 (D₅₀ = 4,45 µm) wurden mittels Ultraschall in die PAN-Lösung dispergiert (Hielscher UIS250V; Amplitude 80%, Cycle: 0,9; Dauer: 30 min). Die resultierende Dispersion wurde mit einem Laborsprühtrockner vom Typ B-290 (BÜCHI GmbH) mit Inertloop B-295 und Entfeuchter B-296 (BÜCHI GmbH) versprüht und getrocknet (Düsenspitze 0,7 mm; Düsenkappe 1,4 mm; Düsentemperatur 130°C; N₂-Gasfluss 30; Aspirator 100%; Pumpe 20%).

Es wurden 7,57 g eines braunen Pulvers erhalten (58% Ausbeute). 6,86 g des Si/PAN-Pulvers wurde in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenthermoelements Typ N mit Stickstoff/H₂ als Inertgas carbonisiert:
Zuerst Heizrate 10°C/min, Temperatur 300°C, Haltedauer 90 min, N₂/H₂-Flussrate 200 ml/min; danach direkt weiter mit Heizrate 10°C/min, Temperatur 1000°C, Haltedauer 3 h, N₂/H₂-Flussrate 200 ml/min.

Nach dem Abkühlen wurden 4,86 g eines schwarzen Pulvers erhalten (Carbonisierungsausbeute 71%), welches mittels Nasssiebung von Überkorn befreit wurde. Es wurden 4,10 g C-beschichtete Si-Partikel mit einer Partikelgröße von D99 < 20 µm erhalten.

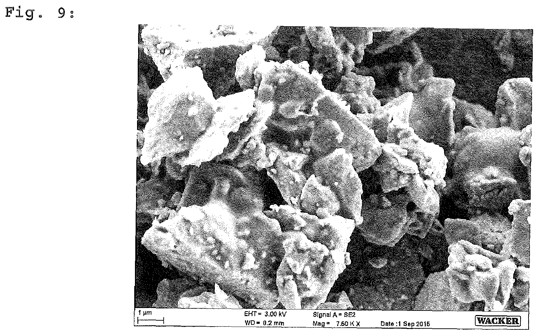

Fig. 9 zeigt eine REM-Aufnahme (7.500fache Vergrößerung) der erhaltenen C-beschichteten Si-Partikel.
Elementare Zusammensetzung: Si ≥ 75 Gew-%; C 19,9 Gew.-%; O 3,08 Gew-%; N 0,97 Gew.-%.
Partikelgrößenverteilung: Monomodal; D₁₀: 5,69 µm, D₅₀: 8,98 µm, D₉₀: 14,2 µm; (D₉₀-D₁₀)/D₅₀ = 0,95.
Spezifische Oberfläche (BET): 10,3 m²/g.
Si-Dichtigkeit: ∼100%.
Pulverleitfähigkeit: 66714,85 µS/cm.

### Vergleichsbeispiel 12 (VBsp. 12):

### nicht-erfindungsgemäße Anode mit dem aggregierten C-beschichteten Mikro-Si aus Vergleichsbeispiel 11:

Mit den aggregierten kohlenstoffbeschichteten Silicium-Mikropartikeln aus Vergleichsbeispiel 11 wurde wie in Beispiel 5 beschrieben eine Anode hergestellt.

Das mittlere Flächengewicht der so hergestellten Anodenbeschichtung betrug 3,0 mg/cm² und die Beschichtungsdichte 0,6 g/cm³.

### Vergleichsbeispiel 13 (VBsp. 13):

### nicht-erfindungsgemäße Lithium-Ionen-Batterie mit der Anode aus Vergleichsbeispiel 12:

Die Anode mit den aggregierten kohlenstoffbeschichteten Silicium-Mikropartikeln aus Vergleichsbeispiel 12 wurde wie in Beispiel 6 beschrieben getestet.

Auf Grund der Rezeptierung in den Vergleichsbeispielen 12 und 13 wurde die Lithium-Ionen-Batterie durch Zellbalancing unter Teil-Lithiierung der Anode betrieben.

Die Vollzelle hatte im zweiten Zyklus eine reversible Anfangskapazität lediglich von 1,85 mAh/cm² und besaß nach 221 Lade-/Entladezyklen noch 80% ihrer ursprünglichen Kapazität.

### Vergleichsbeispiel 14 (VBsp. 14):

### Verdichtung der Anode aus Vergleichsbeispiel 12 enthaltend aggregiertes C-beschichtetes Mikro-Si:

Die Anode mit den aggregierten kohlenstoffbeschichteten Silicium-Mikropartikeln aus Vergleichsbeispiel 12 wurde in einer Pressmatrize mittels uniaxialer Laborpresse (L.O.T.) verdichtet.

Das mittlere Flächengewicht der so hergestellten Anodenbeschichtung betrug 3,0 mg/cm² und die Beschichtungsdichte 0,9 g/cm³.

### Vergleichsbeispiel 15 (VBsp. 15):

### nicht-erfindungsgemäße Lithium-Ionen-Batterie mit der Anode aus Vergleichsbeispiel 14:

Die verdichtete Anode aus Vergleichsbeispiel 14 enthaltend aggregierte kohlenstoffbeschichtete Silicium-Mikropartikel wurde wie in Beispiel 6 beschrieben getestet.

Auf Grund der Rezeptierung in den Vergleichsbeispielen 14 und 15 wurde die Lithium-Ionen-Batterie durch Zellbalancing unter Teil-Lithiierung der Anode betrieben.

Die Vollzelle hatte im zweiten Zyklus eine reversible Anfangskapazität von 2,00 mAh/cm² und besaß nach 60 Lade-/Entladezyklen nur noch 80% ihrer ursprünglichen Kapazität.

In Tabelle 1 sind die Austestungsergebnisse von Beispiel 6 sowie den Vergleichsbeispielen 8, 13 und 15 zusammengefasst.

Die Lithium-Ionen-Batterie von Beispiel 6 zeigte überraschenderweise im Vergleich zu den Lithium-Ionen-Batterien der Vergleichsbeispiele 8, 13 und 15 sowohl eine hohe Anfangskapazität als auch ein stabileres elektrochemisches Verhalten.

**Tabelle 1: Austestungsergebnisse der (Vergleichs) Beispiele 6, 8, 13 und 15:**

| (V)Bsp. | SiliciumPartikel | | Beschichtungsdichte [g/cm³] | Entladekapazität nach Zyklus 1 [mAh/cm²] | Zyklenzahl mit ≥ 80% Kapazitätserhalt |
|---|---|---|---|---|---|
| | C* | Agg.** | | | |
| 6 | Ja | Nein | 0,8 | 2,03 | 220 |
| 8 | Nein | Nein | 0,9 | 2,03 | 203 |
| 13 | Ja | Ja | 0,6 | 1,85 | 221 |
| 15 | Ja | Ja | 0,9 | 2,00 | 60 |

| | | | | | |
|---|---|---|---|---|---|
| *: Siliciumpartikel mit Kohlenstoff-Beschichtung; **: aggregierte Partikel. | | | | | |

## Patentansprüche

1. Nicht-aggregierte Kohlenstoff-beschichtete Siliciumpartikel mit durchschnittlichen Partikeldurchmessern d₅₀ von 1 bis 15 µm, die ≤ 10 Gew.-% Kohlenstoff und ≥ 90 Gew.-% Silicium enthalten, je bezogen auf das Gesamtgewicht der Kohlenstoff-beschichteten Siliciumpartikel, wobei die nicht-aggregierten Kohlenstoff-beschichteten Siliciumpartikel einen Aggregationsgrad von ≤ 40% aufweisen, bestimmt mittels Siebanalyse.

2. Nicht-aggregierte Kohlenstoff-beschichtete Siliciumpartikel gemäß Anspruch 1, **dadurch gekennzeichnet, dass** die nicht-aggregierten Kohlenstoff-beschichteten Siliciumpartikel einen Aggregationsgrad von ≤ 30% aufweisen, bestimmt mittels Siebanalyse.

3. Nicht-aggregierte Kohlenstoff-beschichtete Siliciumpartikel gemäß Anspruch 1 bis 2, **dadurch gekennzeichnet, dass** die Kohlenstoff-Beschichtung der nicht-aggregierten Kohlenstoff-beschichteten Siliciumpartikel eine mittlere Schichtdicke im Bereich von 1 bis 100 nm hat, Bestimmungsmethode: Raster-Elektronen-Mikroskopie (REM).

4. Verfahren zur Herstellung der Kohlenstoff-beschichteten Siliciumpartikel gemäß Anspruch 1 bis 3 nach
a) Trockenverfahren, in denen Mischungen enthaltend Siliciumpartikel und ein oder mehrere schmelzbare Kohlenstoff-Precursoren auf eine Temperatur von < 400°C erwärmt werden, bis die schmelzbaren Kohlenstoff-Precursoren vollständig geschmolzen sind, und anschließend die so erhaltenen geschmolzenen Kohlenstoff-Precursoren carbonisiert werden; oder
b) CVD-Verfahren, in denen Siliciumpartikel unter Einsatz von einer oder mehreren Kohlenstoff-Vorstufen mit Kohlenstoff beschichtet werden, wobei die Partikel während der Durchführung des CVD-Verfahrens bewegt werden und das CVD-Verfahren in einer Atmosphäre durchgeführt wird, die zu 0,1 bis 80 Vol.-% Kohlenstoff-Vorstufen enthält, bezogen auf das Gesamtvolumen der Atmosphäre.

5. Verfahren zur Herstellung der Kohlenstoff-beschichteten Siliciumpartikel gemäß Anspruch 4, **dadurch gekennzeichnet, dass** die als Edukt zur Herstellung der nicht-aggregierten Kohlenstoff-beschichteten Siliciumpartikel eingesetzten Siliciumpartikel eine volumengewichtete Partikelgrößenverteilung mit Durchmesser-Perzentilen d₅₀ von 1 bis kleiner 15 µm haben.

6. Verfahren zur Herstellung der Kohlenstoff-beschichteten Siliciumpartikel gemäß Anspruch 4 oder 5, **dadurch gekennzeichnet, dass** die Differenz aus der volumengewichteten Partikelgrößenverteilung d₅₀ der nicht-aggregierten Kohlenstoff-beschichteten Siliciumpartikel und der volumengewichteten Partikelgrößenverteilung d₅₀ der als Edukt zur Herstellung der nicht-aggregierten Kohlenstoff-beschichteten Siliciumpartikel eingesetzten Siliciumpartikel ≤ 5 µm beträgt.

7. Verfahren zur Herstellung der Kohlenstoff-beschichteten Siliciumpartikel gemäß Anspruch 4 bis 6, **dadurch gekennzeichnet, dass** ein oder mehrere Kohlenstoff-Vorstufen ausgewählt werden aus der Gruppe umfassend Methan, Ethan, Propan, Butan, Pentan, Isobutan, Hexan, Ethylen, Propylen, Buten, Acetylen, Benzol, Toluol, Styrol, Ethylbenzol, Diphenylmethan, Naphthalin, Phenol, Cresol, Nitrobenzol, Chlorbenzol, Pyridin, Anthracen und Phenanthren.

8. Verfahren zur Herstellung der Kohlenstoff-beschichteten Siliciumpartikel gemäß Anspruch 4 bis 7, **dadurch gekennzeichnet, dass** das CVD-Verfahren in einer Atmosphäre durchgeführt wird, die zu 1 bis 30 Vol.-% Kohlenstoff-Vorstufen enthält, bezogen auf das Gesamtvolumen der Atmosphäre.

9. Verfahren zur Herstellung der Kohlenstoff-beschichteten Siliciumpartikel gemäß Anspruch 4 bis 6, **dadurch gekennzeichnet, dass** ein oder mehrere schmelzbare Kohlenstoff-Precursoren eingesetzt werden ausgewählt aus der Gruppe umfassend Polyacrylnitril, Mono-, Di- und Polysaccharide, Polyanilin, Polystyrol, Peche und Teere.

10. Anodenmaterialien für Lithium-Ionen-Batterien enthaltend ein oder mehrere Bindemittel, gegebenenfalls Graphit, gegebenenfalls eine oder mehrere weitere elektrisch leitende Komponenten und gegebenenfalls ein oder mehrere Additive, **dadurch gekennzeichnet, dass** ein oder mehrere Kohlenstoffbeschichtete Siliciumpartikel gemäß Anspruch 1 bis 3 enthalten sind.

11. Lithium-Ionen-Batterien umfassend eine Kathode, eine Anode, einen Separator und einen Elektrolyt, **dadurch gekennzeichnet, dass** die Anode auf einem Anodenmaterial gemäß Anspruch 10 basiert.

12. Lithium-Ionen-Batterien gemäß Anspruch 11, **dadurch gekennzeichnet, dass** das Anodenmaterial der vollständig geladenen Lithium-Ionen-Batterie nur teilweise lithiiert ist.

13. Lithium-Ionen-Batterien gemäß Anspruch 12, **dadurch gekennzeichnet, dass** im teilweise lithiierten Anodenmaterial der vollständig geladenen Batterie das Verhältnis der Lithiumatome zu den Siliciumatomen ≤ 2,2 beträgt.

14. Lithium-Ionen-Batterien gemäß Anspruch 12 oder 13, **dadurch gekennzeichnet, dass** die Kapazität des Siliciums des Anodenmaterials der Lithium-Ionen-Batterie zu ≤ 50% genutzt wird, bezogen auf die maximale Kapazität von 4200 mAh pro Gramm Silicium.

## Claims

1. Nonaggregated carbon-coated silicon particles having average particle diameters d₅₀ of 1 to 15 µm, containing ≤ 10% by weight of carbon and ≥ 90% by weight of silicon, based in each case on the total weight of the carbon-coated silicon particles, wherein the nonaggregated carbon-coated silicon particles have a degree of aggregation of ≤ 40%, determined by means of sieve analysis.

2. Nonaggregated carbon-coated silicon particles according to Claim 1, **characterized in that** the nonaggregated carbon-coated silicon particles have a degree of aggregation of ≤ 30%, determined by means of sieve analysis.

3. Nonaggregated carbon-coated silicon particles according to Claim 1 to 2, **characterized in that** the carbon coating of the nonaggregated carbon-coated silicon particles has an average layer thickness in the range from 1 to 100 nm, determination method: scanning electron microscopy (SEM).

4. Process for producing the carbon-coated silicon particles according to Claim 1 to 3 by
a) dry methods in which mixtures comprising silicon particles and one or more meltable carbon precursors are heated to a temperature of < 400°C until the meltable carbon precursors have completely melted, and then the molten carbon precursors thus obtained are carbonized; or
b) CVD methods in which silicon particles are coated with carbon using one or more carbon precursors, where the particles are agitated during the performance of the CVD method and the CVD method is conducted in an atmosphere containing carbon precursors to an extent of 0.1% to 80% by volume, based on the total volume of the atmosphere.

5. Process for producing the carbon-coated silicon particles according to Claim 4, **characterized in that** the silicon particles used as reactant for production of the nonaggregated carbon-coated silicon particles have a volume-weighted particle size distribution having diameter percentiles d₅₀ of 1 to less than 15 µm.

6. Process for producing the carbon-coated silicon particles according to Claim 4 or 5, **characterized in that** the difference between the volume-weighted particle size distribution d₅₀ of the nonaggregated carbon-coated silicon particles and the volume-weighted particle size distribution d₅₀ of the silicon particles used as reactant for production of the nonaggregated carbon-coated silicon particles is ≤ 5 µm.

7. Process for producing the carbon-coated silicon particles according to Claim 4 to 6, **characterized in that** one or more carbon precursors are selected from the group comprising methane, ethane, propane, butane, pentane, isobutane, hexane, ethylene, propylene, butene, acetylene, benzene, toluene, styrene, ethylbenzene, diphenylmethane, naphthalene, phenol, cresol, nitrobenzene, chlorobenzene, pyridine, anthracene and phenanthrene.

8. Process for producing the carbon-coated silicon particles according to Claim 4 to 7, **characterized in that** the CVD method is conducted in an atmosphere containing carbon precursors to an extent of 1% to 30% by volume, based on the total volume of the atmosphere.

9. Process for producing the carbon-coated silicon particles according to Claim 4 to 6, **characterized in that** one or more meltable carbon precursors selected from the group comprising polyacrylonitrile, mono-, di- and polysaccharides, polyaniline, polystyrene, pitches and tars are used.

10. Anode materials for lithium ion batteries comprising one or more binders, optionally graphite, optionally one or more further electrically conductive components and optionally one or more additives, **characterized in that** one or more carbon-coated silicon particles according to Claim 1 to 3 are present.

11. Lithium ion batteries comprising a cathode, an anode, a separator and an electrolyte, **characterized in that** the anode is based on an anode material according to Claim 10.

12. Lithium ion batteries according to Claim 11, **characterized in that** the anode material of the fully charged lithium ion battery has only been partly lithiated.

13. Lithium ion batteries according to Claim 12, **characterized in that** the ratio of the lithium atoms to the silicon atoms in the partly lithiated anode material of the fully charged battery is ≤ 2.2.

14. Lithium ion batteries according to Claim 12 or 13, **characterized in that** the capacity of the silicon in the anode material of the lithium ion battery is utilized to an extent of ≤ 50%, based on the maximum capacity of 4200 mAh per gram of silicon.

## Revendications

1. Particules de silicium non agrégées, revêtues par du carbone comportant un diamètre moyen de particule d₅₀ de 1 à 15 µm, qui contiennent ≤ 10 % en poids de carbone et ≥ 90 % en poids de silicium, à chaque fois par rapport au poids total des particules de silicium revêtues par du carbone,
les particules de silicium non agrégées, revêtues par du carbone présentant un degré d'agrégation ≤ 40 %, déterminé par analyse granulométrique.

2. Particules de silicium non agrégées, revêtues par du carbone selon la revendication 1, **caractérisées en ce que** les particules de silicium non agrégées, revêtues par du carbone présentent un degré d'agrégation ≤ 30 %, déterminé par analyse granulométrique.

3. Particules de silicium non agrégées, revêtues par du carbone selon la revendication 1 ou 2, **caractérisées en ce que** le revêtement de carbone des particules de silicium non agrégées, revêtues par du carbone possède une épaisseur de couche moyenne dans la plage de 1 à 100 nm, méthode de détermination : microscopie électronique à balayage (MEB) .

4. Procédé pour la préparation des particules de silicium revêtues par du carbone selon la revendication 1 à 3 par
a) procédés à sec, dans lesquels des mélanges contenant des particules de silicium et un ou plusieurs précurseurs de carbone fusibles sont chauffés à une température < 400 °C, jusqu'à ce que les précurseurs de carbone fusibles soient entièrement fondus, et ensuite les précurseurs de carbone fondus ainsi obtenus sont carbonisés ; ou
b) procédés CVD (chemical vapour déposition - dépôt chimique en phase vapeur), dans lesquels des particules de silicium sont revêtues par du carbone par l'utilisation d'un ou plusieurs précurseurs de carbone, les particules étant déplacées pendant la réalisation du procédé CVD et le procédé CVD étant réalisé dans une atmosphère qui contient de 0,1 à 80 % en volume de précurseurs de carbone, par rapport au volume total de l'atmosphère.

5. Procédé pour la préparation des particules de silicium revêtues par du carbone selon la revendication 4, **caractérisé en ce que** les particules de silicium utilisées en tant qu'éduit pour la préparation des particules de silicium non agrégées revêtues par du carbone possèdent une distribution de grosseur de particule pondérée comportant des percentiles de diamètre d₅₀ de 1 à inférieurs à 15 µm.

6. Procédé pour la préparation des particules de silicium revêtues par du carbone selon la revendication 4 ou 5, **caractérisé en ce que** la différence entre la distribution de grosseur de particule pondérée d₅₀ des particules de silicium non agrégées revêtues par du carbone et la distribution de grosseur de particule pondérée d₅₀ des particules de silicium utilisées en tant qu'éduit pour la préparation des particules de silicium non agrégées revêtues par du carbone est ≤ 5 µm.

7. Procédé pour la préparation des particules de silicium revêtues par du carbone selon les revendications 4 à 6, **caractérisé en ce qu'**un ou plusieurs précurseurs de carbone sont choisis dans le groupe comprenant le méthane, l'éthane, le propane, le butane, le pentane, l'isobutane, l'hexane, l'éthylène, le propylène, le butène, l'acétylène, le benzène, le toluène, le styrène, l'éthylbenzène, le diphénylméthane, le naphtalène, le phénol, le crésol, le nitrobenzène, le chlorobenzène, la pyridine, l'anthracène et le phénanthrène.

8. Procédé pour la préparation des particules de silicium revêtues par du carbone selon les revendications 4 à 7, **caractérisé en ce que** le procédé CVD est réalisé dans une atmosphère qui contient de 1 à 30 % en volume de précurseurs de carbone, par rapport au volume total de l'atmosphère.

9. Procédé pour la préparation des particules de silicium revêtues par du carbone selon les revendications 4 à 6, **caractérisé en ce qu'**un ou plusieurs précurseurs de carbone fusibles sont utilisés, choisis dans le groupe comprenant le polyacrylonitrile, les monosaccharides, disaccharides et polysaccharides, la polyaniline, le polystyrène, le brai et les goudrons.

10. Matériau d'anode pour des piles à ions lithium contenant un ou plusieurs liants, éventuellement du graphite, éventuellement un ou plusieurs autres composants électriquement conducteurs et éventuellement un ou plusieurs additifs, **caractérisé en ce qu'**une ou plusieurs particules de silicium revêtues par du carbone selon la revendication 1 à 3 sont contenues.

11. Piles à ions lithium comprenant une cathode, une anode, un séparateur et un électrolyte, **caractérisées en ce que** l'anode est composée d'un matériau d'anode selon la revendication 10.

12. Piles à ions lithium selon la revendication 11, **caractérisées en ce que** le matériau d'anode de la pile à ions lithium totalement chargée est seulement partiellement lithiée.

13. Piles à ions lithium selon la revendication 12, **caractérisées en ce que** dans le matériau d'anode partiellement lithié de la pile totalement chargée le rapport des atomes de lithium aux atomes de silicium est ≤ 2,2.

14. Piles à ions lithium selon la revendication 12 ou 13, **caractérisées en ce que** la capacité du silicium du matériau d'anode de la batterie à ions lithium est utilisée à raison de ≤ 50 %, par rapport à la capacité maximale de 4200 mAh par gramme de silicium.
